# EUROPEAN PATENT SPECIFICATION

(11) **EP 2 515 239 B1**
(45) Date of publication and mention of the grant of the patent: **29.03.2017**
(21) Application number: 10837206.1
(22) Date of filing: 29.10.2010
(51) Int. Cl.: G06F 12/14, G06F 21/74

(54) **INFORMATION PROCESSING APPARATUS**
INFORMATIONSVERARBEITUNGSVORRICHTUNG
APPAREIL DE TRAITEMENT D'INFORMATIONS

(30) Priority: 14.12.2009 JP 2009283423
(43) Date of publication of application: 24.10.2012
(73) Proprietor: Panasonic Intellectual Property Management Co., Ltd., Osaka-shi, Osaka 540-6207 (JP)
(72) Inventor: MAEDA, Manabu, Osaka-shi, Osaka 540-6207 (JP); ITO, Takayuki, Osaka-shi, Osaka 540-6207 (JP); HAGA, Tomoyuki, Osaka-shi, Osaka 540-6207 (JP); MATSUSHIMA, Hideki, Osaka-shi, Osaka 540-6207 (JP)
(74) Representative: Vigand, Philippe
(86) International application number: PCT/JP2010/006396
(87) International publication number: WO 2011/074168

(56) References cited:
- JP-A- 2002 073 196
- JP-A- 2005 173 939
- JP-A- 2006 350 782
- US-A1- 2003 084 256

## Description

### [Technical Field]

The present invention relates to an information processing apparatus that prevents unauthorized access to data. An information processing apparatus reflecting the preamble of claim 1 is disclosed by the document JP 2006 350782.

### [Background Art]

In a conventional television or mobile phone, a user who has purchased the appliance can download and use an application program (hereafter referred to as "application") to add a new function. Conventionally, access to various resources in the appliance by such an application is restricted. However, recent years have seen emergence of appliances that ease the access restriction and allow access to various resources, in order to facilitate development of a wide variety of applications. In the future, appliances that allow access to more resources by enabling not only an application but also a device driver program (hereafter referred to as "device driver") to be downloaded are expected to emerge. In particular, when the device driver is installable, the user can add new hardware to the purchased appliance. This contributes to a wider range of function addition than at present.

Applications mentioned above are conventionally developed and distributed only by specific application development companies. In recent years, however, a mechanism whereby applications can also be developed and distributed by general users is being established. In such a mechanism, a development tool typically used in a personal computer (hereafter referred to as "PC") is available and a debug apparatus is connectable to an appliance being sold, to ease the development of applications by general users.

Meanwhile, there is a problem of leakage of data, such as personal information, which is stored in a PC, a mobile phone, or the like. Especially, the PC is subjected to such an act that, through the use of an unauthorized download program downloaded from an open network such as the Internet, reads data such as personal information stored in a storage device of the PC and transmits the data to outside the PC via the network, against the user's intension. The unauthorized download program causes the user to download the unauthorized download program, by using mail or the like to make the user believe that the unauthorized download program is a useful program, or by exploiting vulnerability of a program running on the PC.

In such a situation where a downloaded application or device driver can access many resources in a PC, a television, a mobile phone, or the like or a general user can develop and distribute an application or a device driver, there is a growing threat of an attack on personal information and the like stored in the appliance. In detail, a malicious attacker can easily develop or install an attack application (hereafter referred to as "unauthorized application") or an attack device driver (hereafter referred to as "unauthorized device driver"). The unauthorized application or the unauthorized device driver can access information in the appliance. This poses a greater risk of the attack such as information leakage or tampering.

The attack tends to be conducted on a file stored in a nonvolatile storage device in the appliance, mainly through the use of an unauthorized application. This kind of attack is typically dealt with by encrypting the file. However, when an application uses data, the encrypted file needs to be decrypted. There is a danger that the attack is conducted at this timing of decrypting the encrypted file. In particular, an unauthorized device driver can access all memories in the appliance. This increases a risk that the unauthorized device driver accesses data which is being loaded in a RAM by a running application, and leaks or tampers with the data.

As a conventional method of preventing unauthorized access to data in a RAM, there is a method that uses a memory management unit (hereafter referred to as "MMU") or a method that uses a memory protection unit (for example, see PTL 1). FIG. 40 is a diagram showing a conventional memory access protection system described in PTL 1.

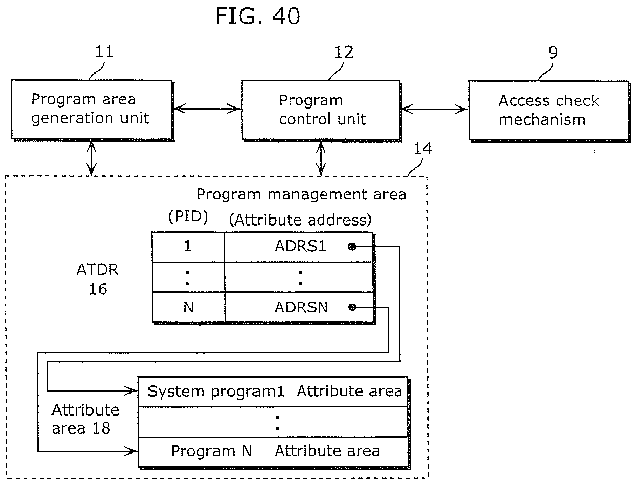

In FIG. 40, a program area generation unit 11 and a program control unit 12 are programs located in a system core area in a memory (not shown). A program management area 14 is data located in the system core area in the memory (not shown). An access check mechanism 9 is hardware. In addition to the system core area for programs that serve as core programs among system programs, the memory (not shown) includes partitions that are a system area for normal system programs and a user area for user level programs.

According to an instruction from an operator, the program control unit 12 loads a program file (not shown) into the user area in the memory (not shown), and assigns a program identifier. The program control unit 12 also instructs the program area generation unit 11 to reserve an area in the memory necessary for executing the loaded program file, and generate an attribute table. The program control unit 12 obtains an address of the attribute table from the program area generation unit 11, and instructs the access check mechanism 9 to load the attribute table. The program control unit 12 further performs settings necessary for executing the program file, and starts the execution of the program.

The program area generation unit 11 lists segments by instruction, by data, and by stack, from the program file of the program loaded. The program area generation unit 11 groups the program, based on attribute-related designation. The program area generation unit 11 assigns a page identifier (provisional serial number) and an attribute (executable, readable, writable, cache bypass) to each group according to its size, to generate the attribute table. The program area generation unit 11 passes the address of the generated attribute table to the program control unit 12, and also registers the attribute table in an attribute area directory (ATDR) 16.

The program management area 14 includes the attribute area directory (ATDR) 16 and an attribute area 18. A program identifier and an attribute area address are stored in the program area directory 16 on a program-by-program basis. An attribute table including a bitmap per attribute is stored in the attribute area 18 on a program-by-program basis. The attribute table represents a result of dividing all areas of the memory (not shown) into a predetermined number of blocks, and includes a page block number and a bitmap per attribute of each page in the block.

The access check mechanism 9 holds a copy of the attribute table in the memory (not shown). When an instruction processing unit (not shown) accesses the memory, the access check mechanism 9 checks an attribute of an accessed page against an access code (E: instruction execution, R: read, W: write) for designating an access type, and permits or suppresses the memory access according to a result of the check.

### [Citation List]

### [Patent Literature]

[PTL 1] Japanese Patent No. 3607540
[PTL 2] Japanese Unexamined Patent Application Publication No. 2005-011336

### [Non Patent Literature]

[NPL 1] Tatsuaki Okamoto and Hirosuke Yamamoto, "Gendai Ango" (Modern Cryptography), Sangyo Tosho (1997)
[NPL 2] Kaoru Kurosawa and Wakaha Ogata, "Gendai Ango no Kiso Suri" (Introduction to Modern Cryptography), Corona Publishing Co., Ltd. (2004)
[NPL 3] ITU-T Recommendation X.509 (1997 E): Information Technology - Open Systems Interconnection - The Directory: Authentication Framework, 1997

Further art is disclosed by the documents US 2003/084256, JP 2002 073196 and JP 2005 173939.

### [Summary of Invention]

### [Technical Problem]

However, the conventional structure described above has the following problem. In the case of applying the conventional structure to a general-purpose operating system such as Linux (registered trademark) widely used in a television, a mobile phone, or the like, a program included in the system core area and a program included in the system area need to be run in the same mode (privileged mode). This being so, when an unauthorized device driver is installed and runs in the privileged mode, the unauthorized device driver can unauthorizedly access data in the RAM because there is no memory access protection mechanism against a program running in the privileged mode.

The conventional structure also has the following problem. In the conventional structure, a program in the privileged mode performs the generation of the attribute table for determining whether to permit or deny memory access. This raises a possibility that an unauthorized device driver unauthorizedly generates or tampers with the attribute table. That is, the unauthorized device driver can tamper with an attribute table of an unauthorized application so that the unauthorized application is allowed to access a memory area allocated to another application. Thus, the unauthorized application can unauthorizedly access data in the RAM managed by another application.

The present invention has been developed to solve the conventional problems stated above, and has an object of providing an information processing apparatus having a memory access protection function that can prevent an unauthorized application or an unauthorized device driver from accessing data in a RAM managed by another application.

### [Solution to Problem]

The present Invention is defined in the appended independent claim to which reference should be made. Advantageous features are set out in the appended dependent claims.

To solve the conventional problems stated above, an information processing apparatus according to the present invention includes: a processor that has, as an operating mode, a privileged mode and an unprivileged mode; a trusted memory that stores protected data, the protected data being used by a program running on the processor when the processor is in the unprivileged mode; and a trusted memory control unit that controls access to the trusted memory, wherein the trusted memory control unit, when the processor accesses the trusted memory: determines the operating mode of the processor; and denies the access to the trusted memory by the processor, in the case where the operating mode of the processor is the privileged mode.

According to this structure, a program running in the privileged mode is prevented from accessing protected data (information asset) used by an application. Hence, an unauthorized device driver is prevented from unauthorizedly accessing data used by an application, or tampering with an attribute table for determining whether to permit or deny memory access so that an unauthorized application can unauthorizedly access protected data.

Note that the present invention can be realized not only as the information processing apparatus including such characteristic processing units, but also as a memory access control method including steps of processing executed by the characteristic processing units included in the information processing apparatus. The present invention can also be realized as a program causing a computer to function as the characteristic processing units included in the information processing apparatus, or a program causing a computer to execute the characteristic steps included in the memory access control method. Such a program may be distributed via a non-transitory computer-readable recording medium such as a CD-ROM (Compact Disc - Read Only Memory) or a communication network such as the Internet.

### [Advantageous Effects of Invention]

According to the present invention, an information processing apparatus having a memory access protection function that can prevent an unauthorized application or an unauthorized device driver from accessing data in a RAM managed by another application can be provided.

### [Brief Description of Drawings]

[FIG. 1]

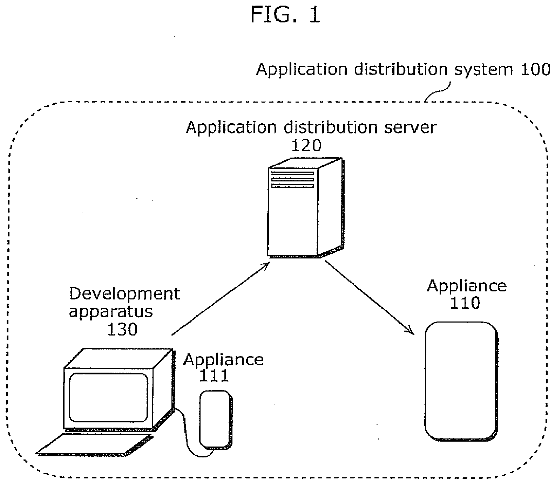

   FIG. 1 is a diagram of an overall structure of an application distribution system in Embodiment 1 of the present invention.
[FIG. 2]

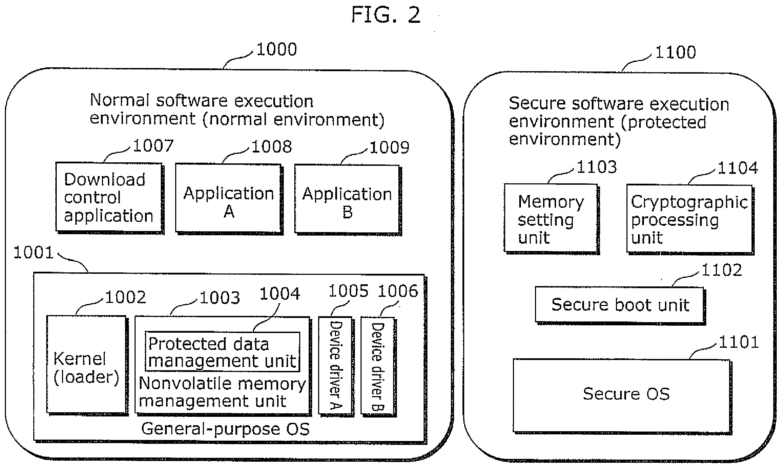

   FIG. 2 is a diagram of a software structure of an appliance in Embodiment 1 of the present invention.
[FIG. 3]

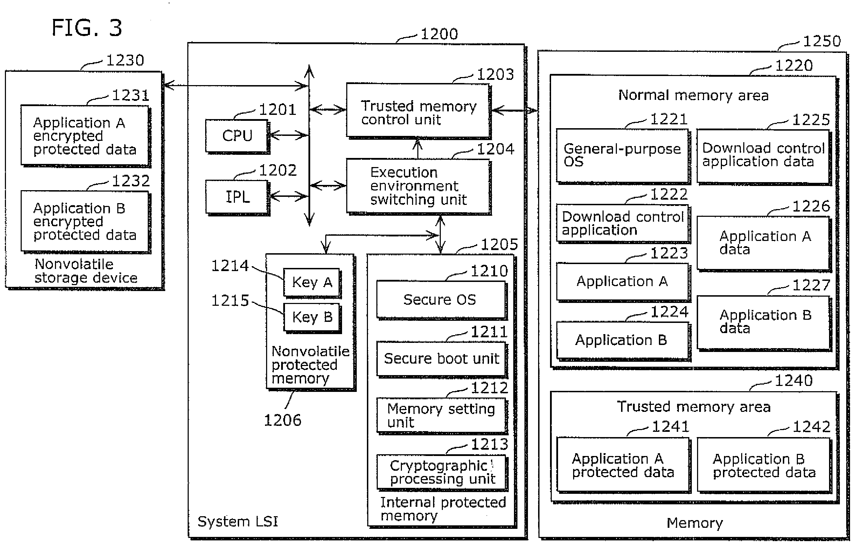

   FIG. 3 is a diagram of a hardware structure of the appliance in Embodiment 1 of the present invention.
[FIG. 4]

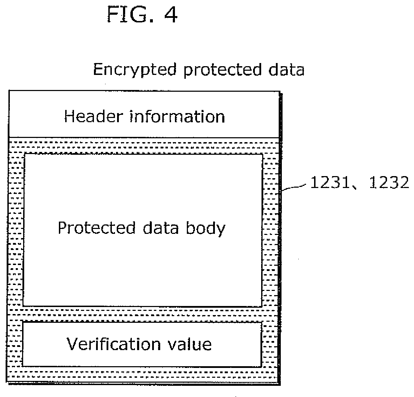

   FIG. 4 is a diagram of a structure of encrypted protected data in Embodiment 1 of the present invention.
[FIG. 5]

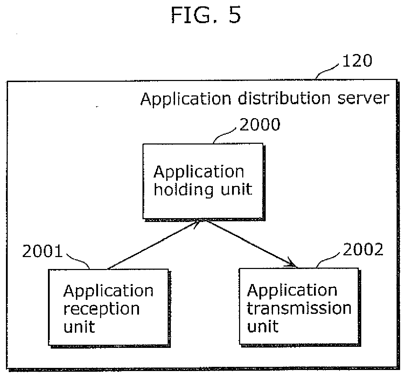

   FIG. 5 is a diagram of a structure of an application distribution server in Embodiment 1 of the present invention.
[FIG. 6]

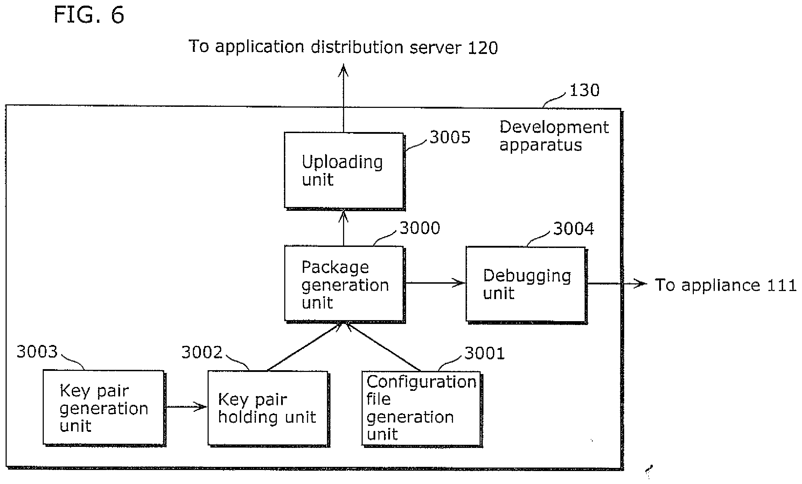

   FIG. 6 is a diagram of a structure of a development apparatus in Embodiment 1 of the present invention.
[FIG. 7]

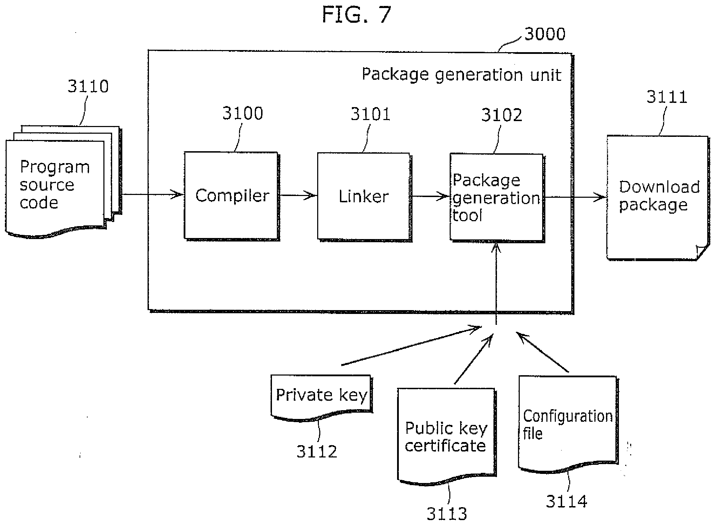

   FIG. 7 is a diagram of a structure of a package generation unit in Embodiment 1 of the present invention.
[FIG. 8]

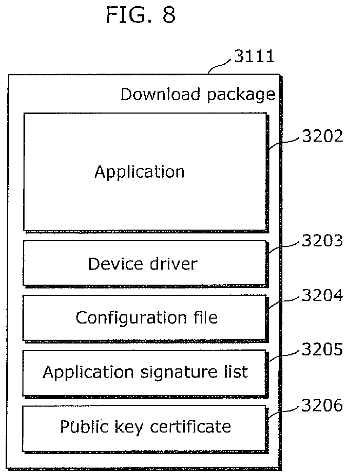

   FIG. 8 is a diagram of a structure of a download application package in Embodiment 1 of the present invention.
[FIG. 9]

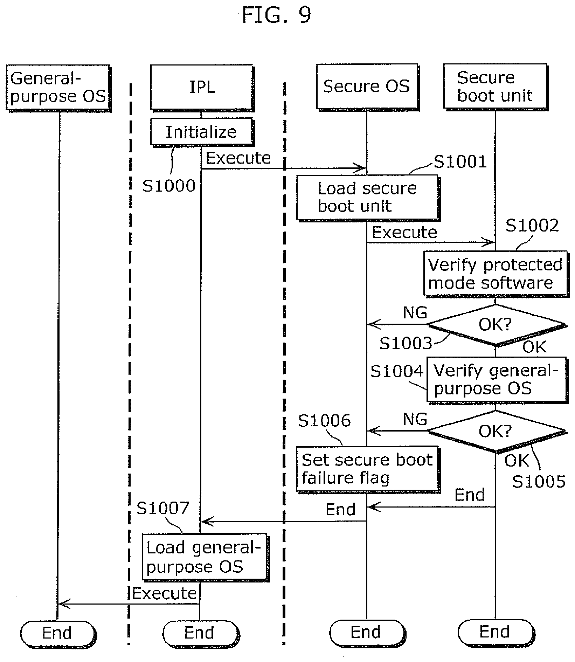

   FIG. 9 is a flowchart of a secure boot in Embodiment 1 of the present invention.
[FIG. 10]

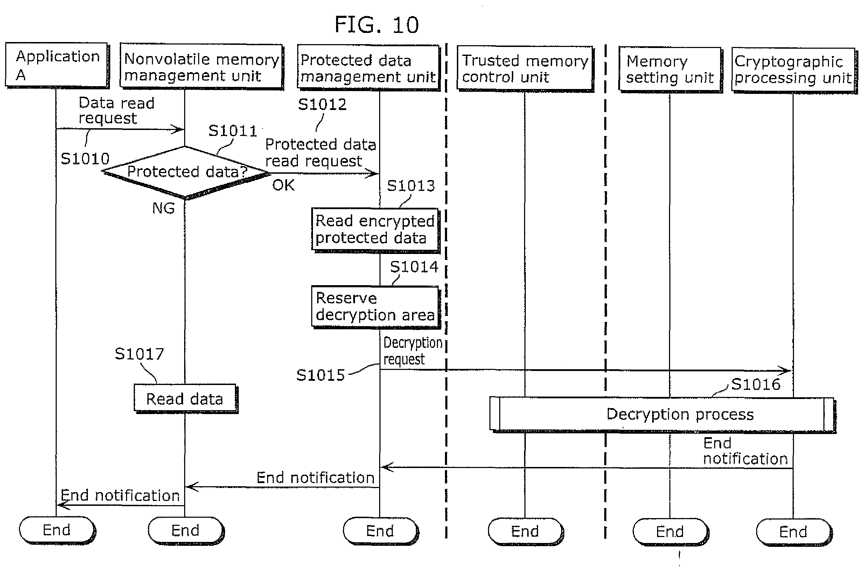

   FIG. 10 is a flowchart of a protected data reading process in Embodiment 1 of the present invention.
[FIG. 11]

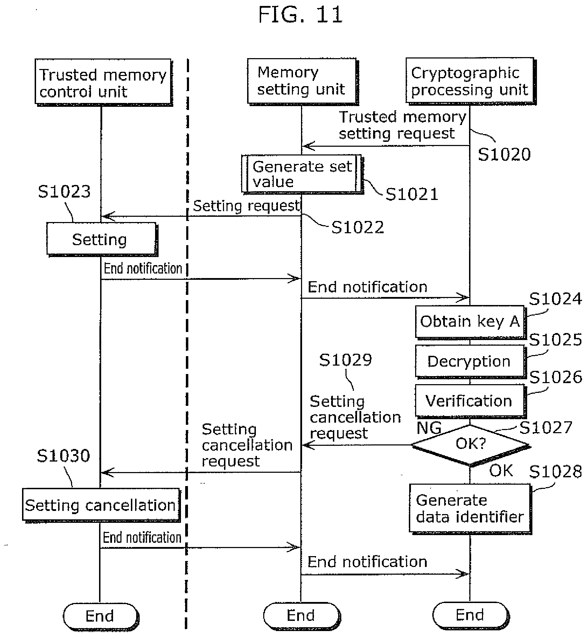

   FIG. 11 is a flowchart of a decryption process in Embodiment 1 of the present invention.
[FIG. 12]

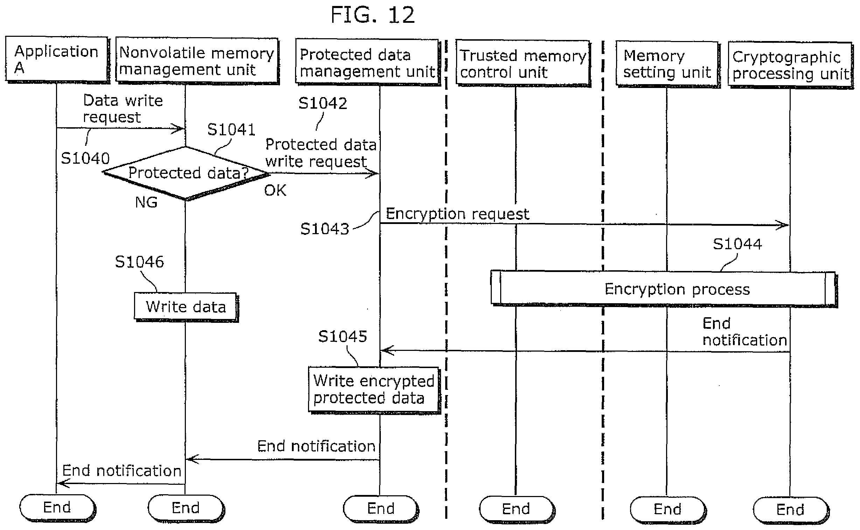

   FIG. 12 is a flowchart of a protected data writing process in Embodiment 1 of the present invention.
[FIG. 13]

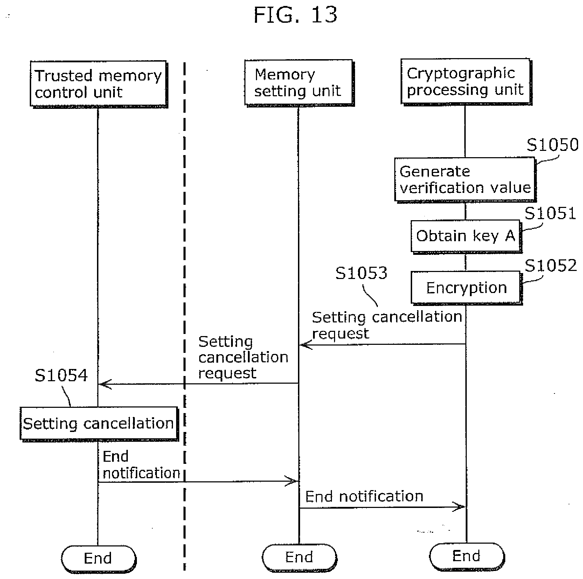

   FIG. 13 is a flowchart of an encryption process in Embodiment 1 of the present invention.
[FIG. 14]

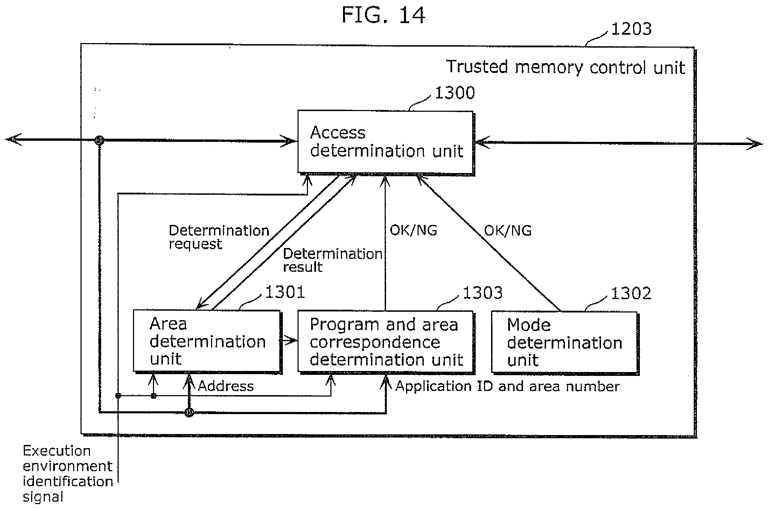

   FIG. 14 is a diagram of a structure of a trusted memory control unit in Embodiment 1 of the present invention.
[FIG. 15]

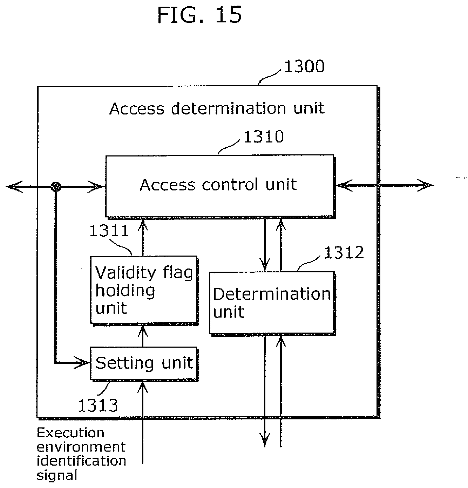

   FIG. 15 is a diagram of a structure of an access determination unit in Embodiment 1 of the present invention.
[FIG. 16]

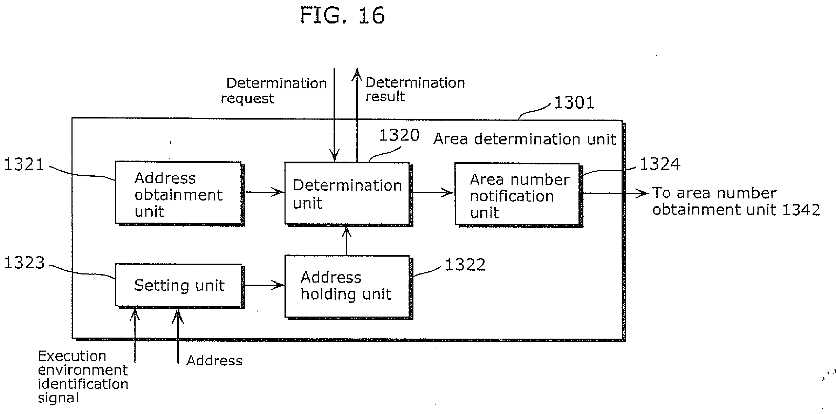

   FIG. 16 is a diagram of a structure of an area determination unit in Embodiment 1 of the present invention.
[FIG. 17A]

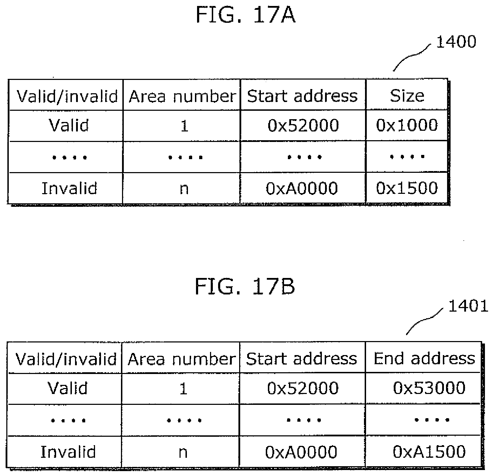

   FIG. 17A is a diagram of a structure of an address list in Embodiment 1 of the present invention.
[FIG. 17B]
   FIG. 17B is a diagram of a structure of an address list in Embodiment 1 of the present invention.
[FIG. 18]

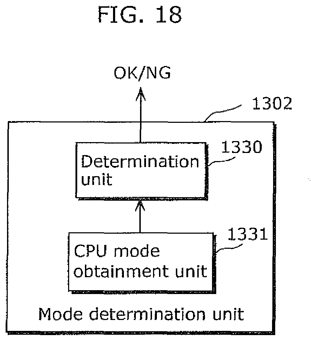

   FIG. 18 is a diagram of a structure of a mode determination unit in Embodiment 1 of the present invention.
[FIG. 19]

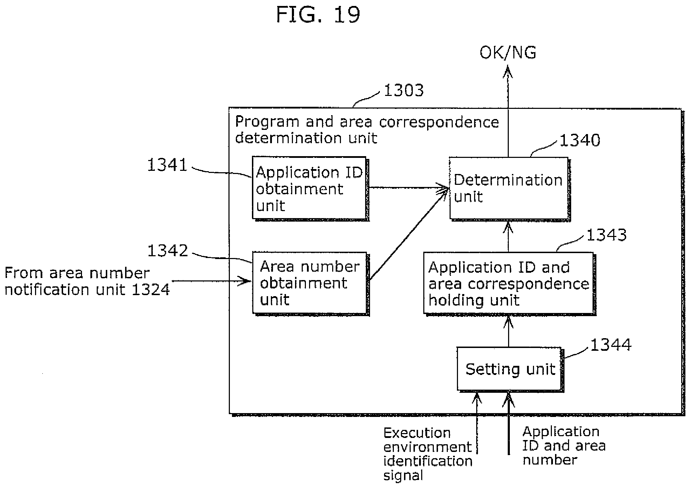

   FIG. 19 is a diagram of a structure of a program and area correspondence determination unit in Embodiment 1 of the present invention.
[FIG. 20A]

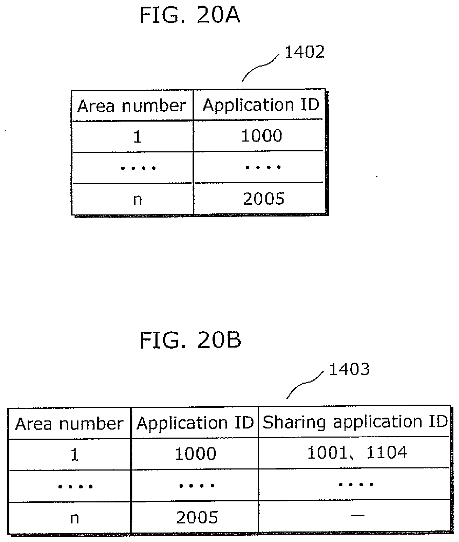

   FIG. 20A is a diagram of a structure of an application ID and area correspondence list in Embodiment 1 of the present invention.
[FIG. 20B]
   FIG. 20B is a diagram of a structure of an application ID and area correspondence list in Embodiment 1 of the present invention.
[FIG. 21]

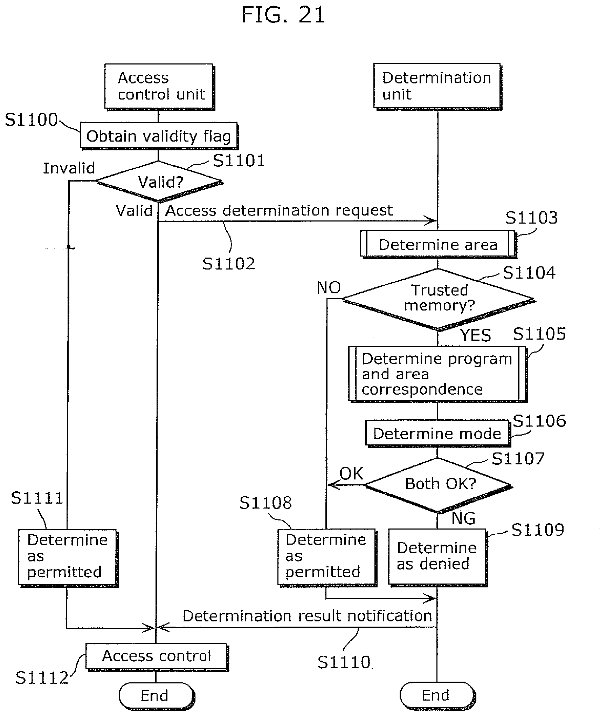

   FIG. 21 is a flowchart of a determination process of the access determination unit in Embodiment 1 of the present invention.
[FIG. 22]

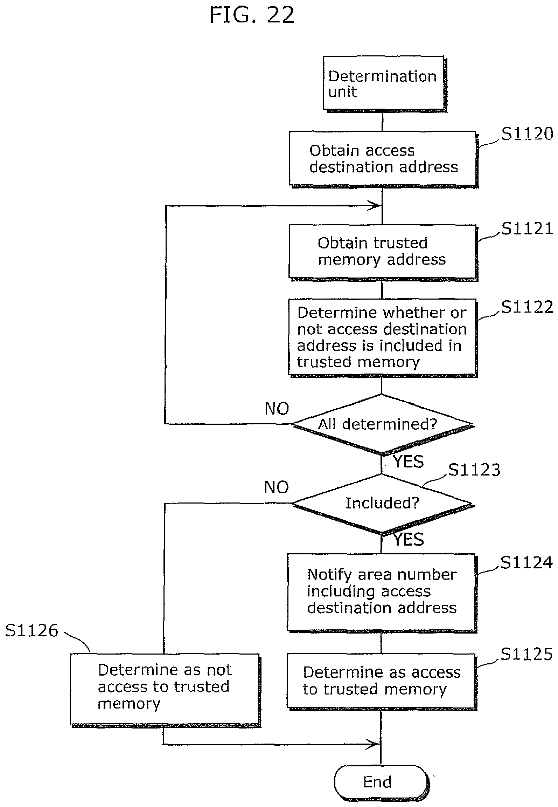

   FIG. 22 is a flowchart of a determination process of the area determination unit in Embodiment 1 of the present invention.
[FIG. 23]

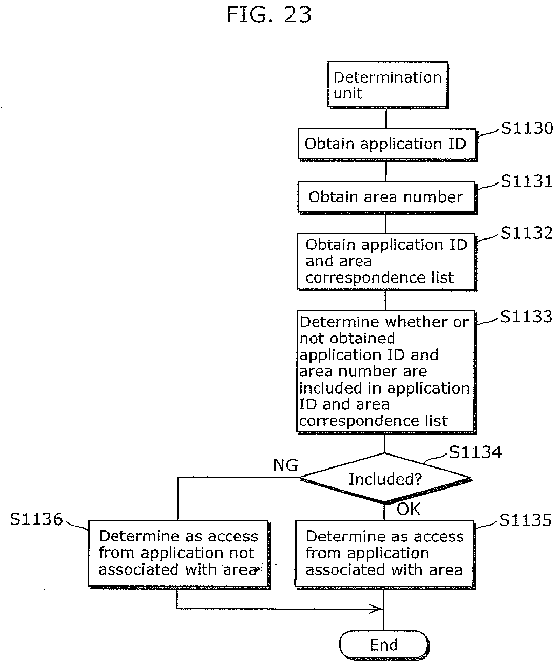

   FIG. 23 is a flowchart of a determination process of the program and area correspondence determination unit in Embodiment 1 of the present invention.
[FIG. 24]

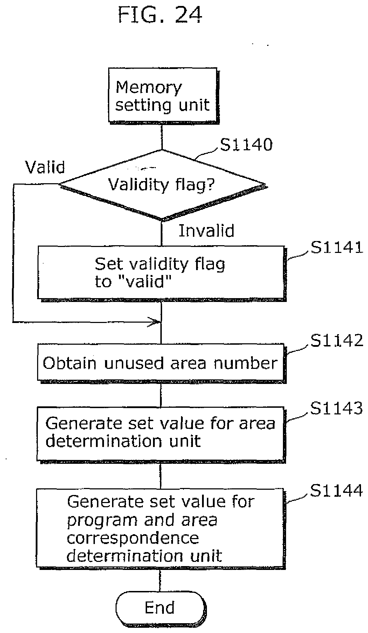

   FIG. 24 is a flowchart of a set value generation process in Embodiment 1 of the present invention.
[FIG. 25]

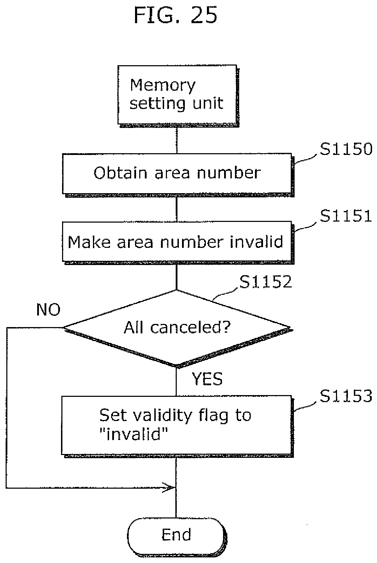

   FIG. 25 is a flowchart of a setting cancellation request process of a memory setting unit in Embodiment 1 of the present invention.
[FIG. 26]

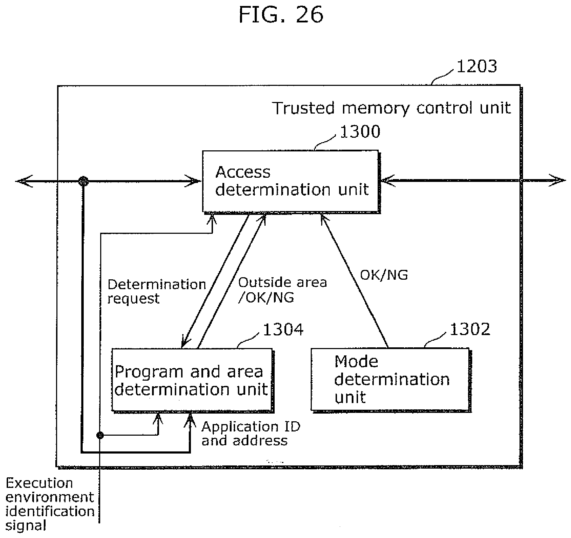

   FIG. 26 is a diagram of a structure of a trusted memory control unit in Embodiment 2 of the present invention.
[FIG. 27]

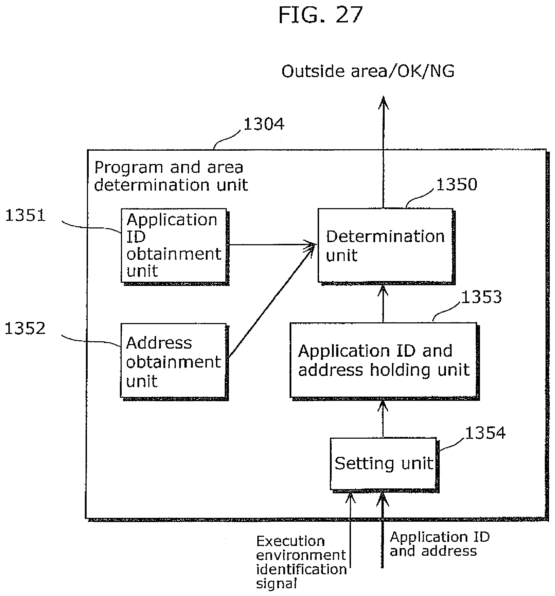

   FIG. 27 is a diagram of a structure of a program and area determination unit in Embodiment 2 of the present invention.
[FIG. 28A]

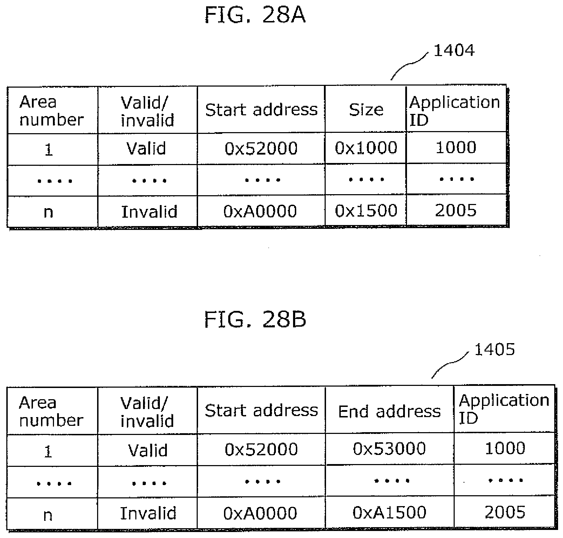

   FIG. 28A is a diagram of a structure of an application ID and address correspondence list in Embodiment 2 of the present invention.
[FIG. 28B]
   FIG. 28B is a diagram of a structure of an application ID and address correspondence list in Embodiment 2 of the present invention.
[FIG. 29]

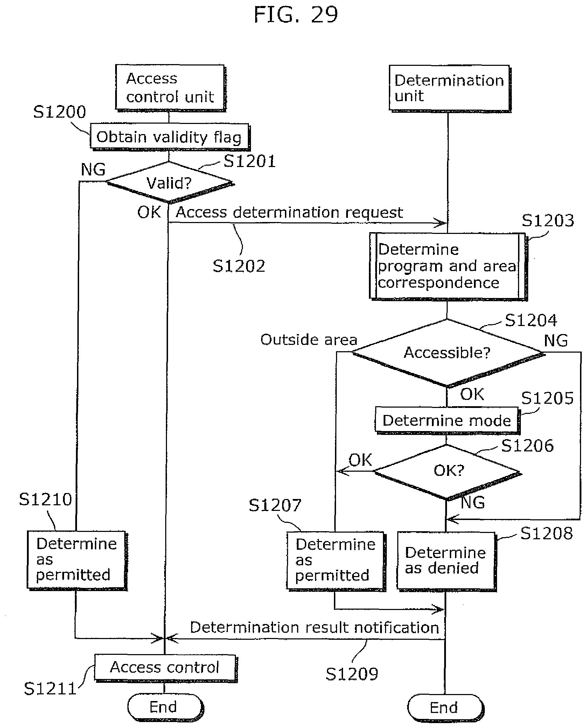

   FIG. 29 is a flowchart of a determination process of an access determination unit in Embodiment 2 of the present invention.
[FIG. 30]

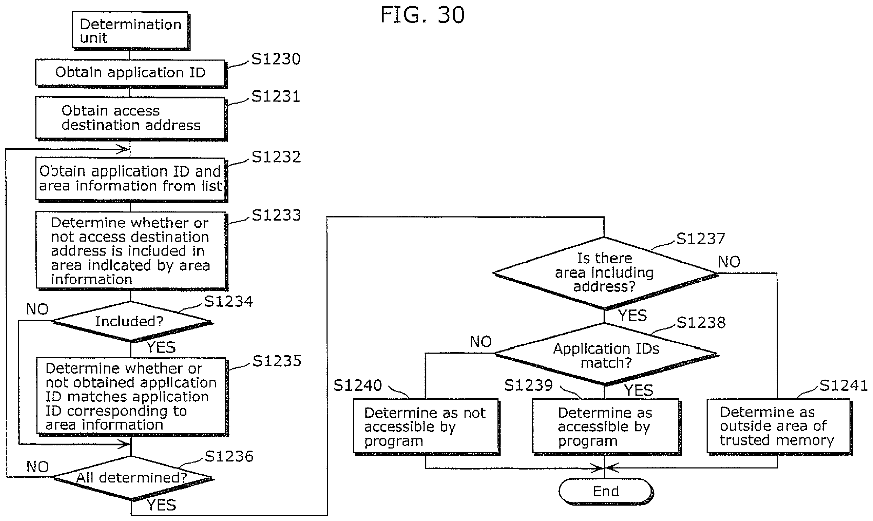

   FIG. 30 is a flowchart of a determination process of the program and area determination unit in Embodiment 2 of the present invention.
[FIG. 31]

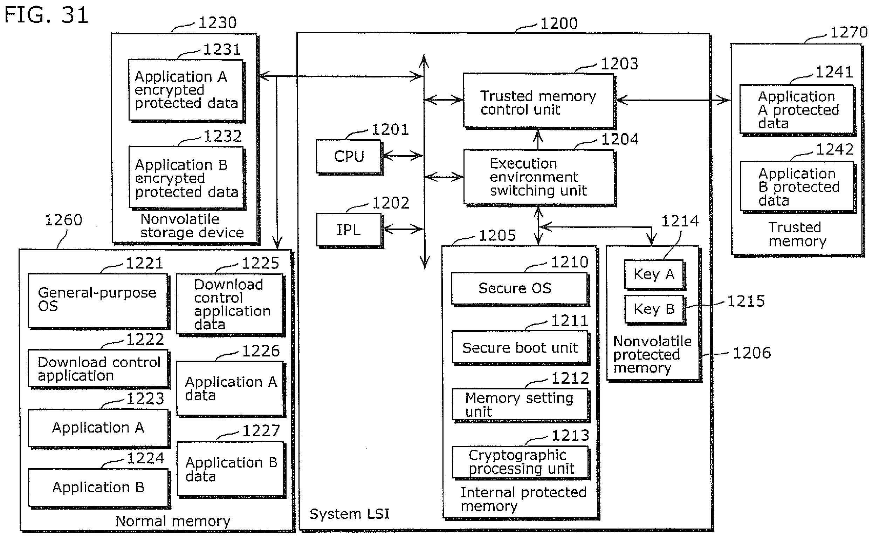

   FIG. 31 is a diagram of a hardware structure of an appliance in Example 1 of the present invention.
[FIG. 32]

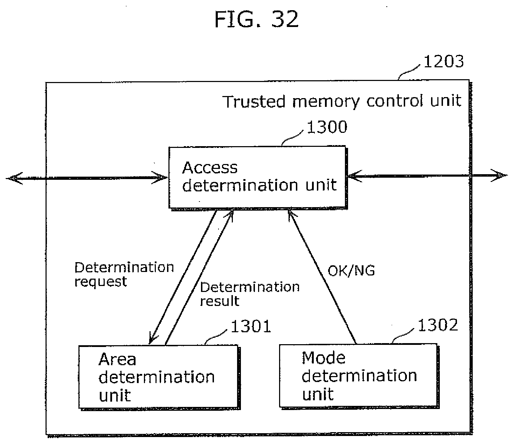

   FIG. 32 is a diagram of a structure of a trusted memory control unit in Example 1 of the present invention.
[FIG. 33]

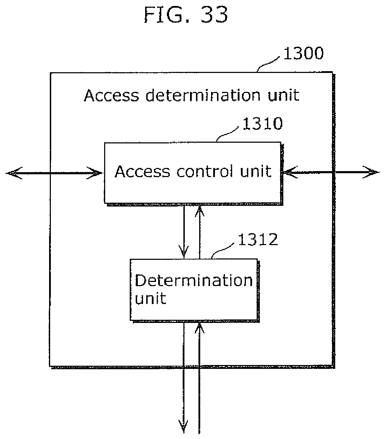

   FIG. 33 is a diagram of a structure of an access determination unit in Example 1 of the present invention.
[FIG. 34]

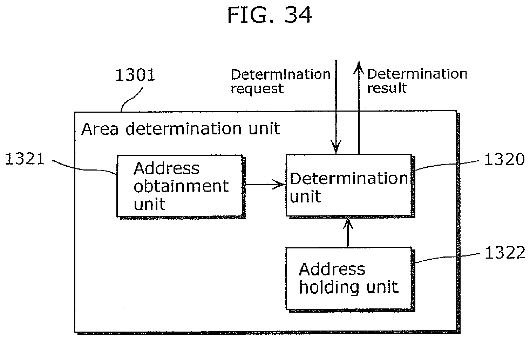

   FIG. 34 is a diagram of a structure of an area determination unit in Example 1 of the present invention.
[FIG. 35]

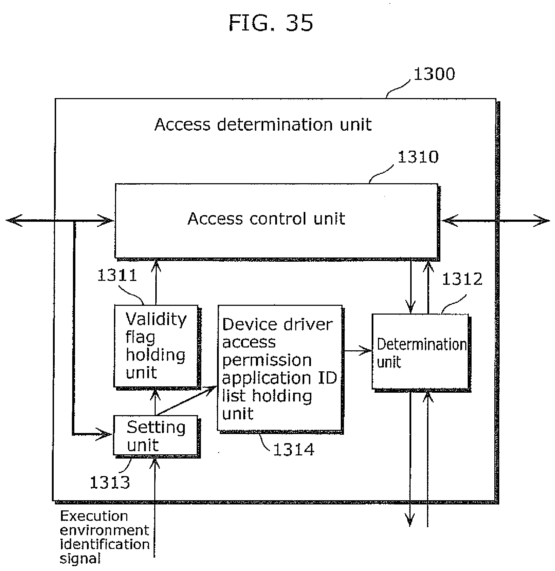

   FIG. 35 is a diagram of a structure of an access determination unit in Example 2 of the present invention.
[FIG. 36]

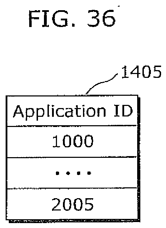

   FIG. 36 is a diagram of a structure of a device driver access permission application ID list in Example 2 of the present invention.
[FIG. 37]

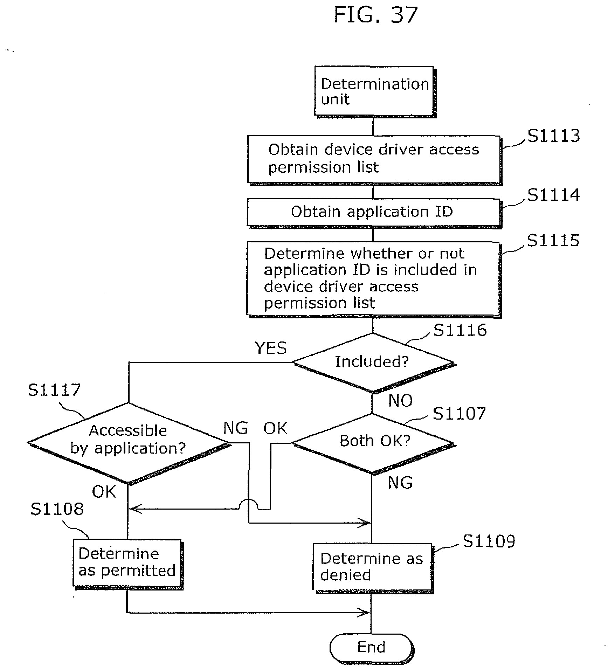

   FIG. 37 is a flowchart of a determination process of the access determination unit in Example 2 of the present invention.
[FIG. 38]

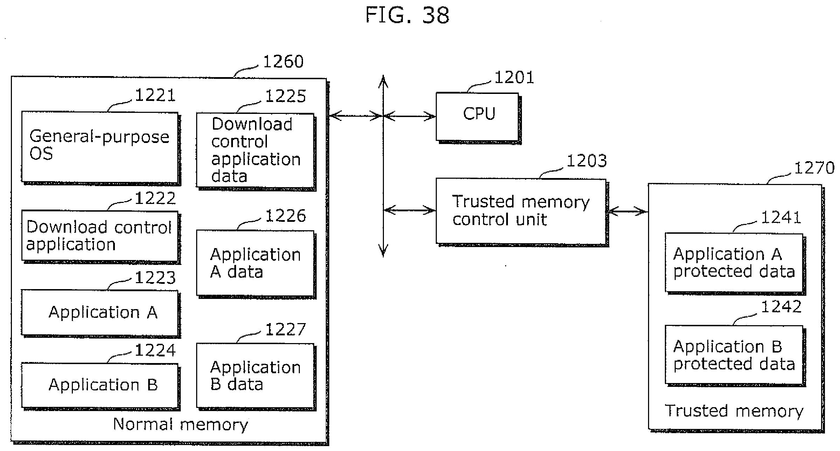

   FIG. 38 is a diagram of a hardware structure of an appliance in a notn claimed example.
[FIG. 39]

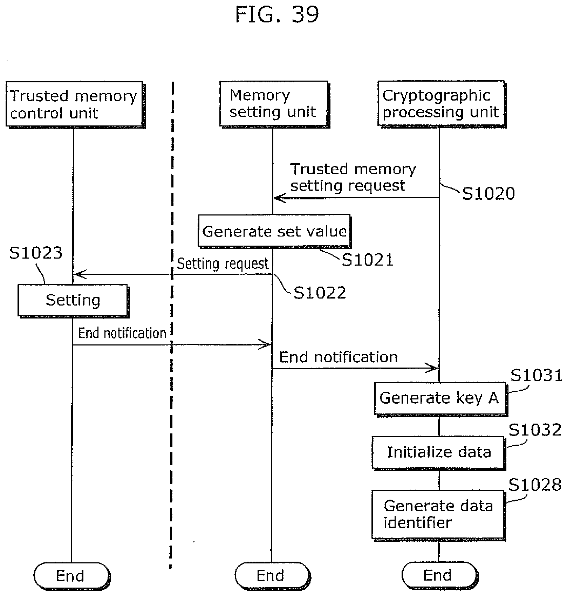

   FIG. 39 is a flowchart of an initialization process in Variation 5 of the present invention.
[FIG. 40]
   FIG. 40 is a diagram of a structure of a conventional memory attribute management system.

### [Description of Embodiments]

The following describes embodiments of the present invention with reference to drawings.

### [Embodiment 1]

### (Structure of an Application Distribution System 100)

FIG. 1 is a diagram of a structure of an application distribution system 100 in Embodiment 1 of the present invention.

In FIG. 1, the application distribution system 100 includes an appliance 110, an application distribution server 120, a development apparatus 130, and an appliance 111.

The appliance 110 is connected to the application distribution server 120 via a network, and downloads an application. Having downloaded the application, the appliance 110 installs the application to add a new function.

The application distribution server 120 is connected to the appliance 110 and the development apparatus 130 via the network, and performs management of an application uploaded from the development apparatus 130 and downloading of an application to the appliance 110.

The development apparatus 130 is connected to the application distribution server 120 via the network, and develops an application that runs on the appliance 110. The development apparatus 130 is also connected to the appliance 111 via an interface of a standard such as Universal Serial Bus (hereafter referred to as "USB"). A developer develops the application on the development apparatus 130, and conducts a test on the appliance 111 to check whether or not the application runs as expected. The development apparatus 130 then uploads the developed application to the application distribution server 120, thereby making the application available to the appliance 110. Note that the appliances 110 and 111 are appliances having the same functions, and differ only in whether used by a general user (the appliance 110) or a developer (the appliance 111).

### (Software Structure of the Appliance 110 or 111)

FIG. 2 is a diagram of a software structure of the appliance 110 or 111 in Embodiment 1 of the present invention.

In FIG. 2, the appliance 110 or 111 has a normal software execution environment (hereafter referred to as "normal environment") 1000 and a secure software execution environment (hereafter referred to as "protected environment") 1100. The appliance 110 or 111 executes software (software of the normal environment 1000 or the protected environment 1100), while switching between the normal environment 1000 and the protected environment 1100. That is, the appliance 110 or 111 has any one of the normal environment 1000 and the protected environment 1100, with there being no instance where the appliance has both of the environments or none of the environments. In the normal environment 1000, the appliance 110 or 111 can access only a memory area that is accessible in the normal environment 1000. In the protected environment 1100, the appliance 110 or 111 can access the memory area that is accessible in the normal environment 1000 and a memory area that is accessible in the protected environment 1100.

For example, a method described in PTL 2 may be used as a method of switching between the normal environment 1000 and the protected environment 1100.

### (Software Structure of the Normal Environment 1000)

Software of the normal environment 1000 includes a general-purpose operating system (hereafter referred to as "general-purpose OS") 1001, a download control application 1007, an application A 1008, and an application B 1009. The general-purpose OS 1001 includes a kernel 1002, a nonvolatile memory management unit 1003, a device driver A 1005, and a device driver B 1006. The nonvolatile memory management unit 1003 includes a protected data management unit 1004.

The general-purpose OS 1001 loads an application into a memory and executes the application, or deletes (unloads) an application from the memory, using the kernel 1002. The general-purpose OS 1001 also manages data stored in a nonvolatile memory connected to the appliance 110 or 111, using the nonvolatile memory management unit 1003. In particular, the general-purpose OS 1001 manages protected data accessed by the application A 1008 or the application B 1009, using the protected data management unit 1004. A protected data management method using the protected data management unit 1004 will be described later, with reference to a flowchart.

The general-purpose OS 1001 further manages access to hardware that is or will be connected to the appliance 110 or 111, using the device driver A 1005 or the device driver B 1006. The device driver A 1005 or the device driver B 1006 operates according to a request from inside the general-purpose OS 1001 or an application running on the general-purpose OS 1001.

The download control application 1007 communicates with the application distribution server 120 which is connected with the appliance 110 via the Internet, and performs a process of downloading an application from the application distribution server 120 and a process of installing the application in the appliance 110.

The application A 1008 and the application B 1009 each have functions such as an address management function, a Web browse function, and an electronic mail function, and offer these functions to the user.

### (Software Structure of the Protected Environment 1100)

Software of the protected environment 1100 includes a secure operating system (hereafter referred to as "secure OS") 1101, a secure boot unit 1102, a memory setting unit 1103, and a cryptographic processing unit 1104.

The secure OS 1101 manages the software of the protected environment 1100.

The secure boot unit 1102 performs a secure boot at power-on of the appliance 110 or 111. A secure boot process will be described later, with reference to a flowchart.

The memory setting unit 1103 performs various settings for a memory on which protected data accessed by the application A 1008 or the application B 1009 is loaded.

The cryptographic processing unit 1104 performs a process of decrypting protected data that is stored in an encrypted state, and a process of encrypting protected data that is loaded in the memory. The encryption and decryption processes will be described later, with reference to a flowchart.

### (Hardware Structure of the Appliance 110 or 111)

FIG. 3 is a diagram of a hardware structure of the appliance 110 or 111 in Embodiment 1 of the present invention.

The components shown in FIG. 2 correspond to components stored in an internal protected memory 1205 and a memory 1250 shown in FIG. 3. Functions can be realized by a CPU 1201 executing a program for realizing these components.

In FIG. 3, the appliance 110 or 111 includes a system LSI 1200, a nonvolatile storage device 1230, and the memory 1250. The system LSI 1200 is connected to the nonvolatile storage device 1230 via an external bus. The system LSI 1200 is also connected to the memory 1250 via a dedicated external bus.

The system LSI 1200 includes the CPU 1201, an Initial Program Loader (hereafter referred to as "IPL") 1202, a trusted memory control unit 1203, an execution environment switching unit 1204, the internal protected memory 1205, and a nonvolatile protected memory 1206. The system LSI 1200 will be described in detail later.

The nonvolatile storage device 1230 stores application A encrypted protected data 1231 and application B encrypted protected data 1232. The application A encrypted protected data 1231 is data generated by encrypting protected data that is accessed by the application A during program execution. The same applies to the application B encrypted protected data 1232. FIG. 4 shows a structure of each of the encrypted protected data 1231 and 1232. The encrypted protected data 1231 and 1232 each have a structure including header information in an unencrypted state and information generated by encrypting a protected data body and a verification value together. The verification value is a hash value obtained by applying the protected data body to a hash function.

Note that the nonvolatile storage device 1230 may store only one of the application A encrypted protected data 1231 and the application B encrypted protected data 1232.

Though the above describes the case where the encrypted protected data includes the header information in an unencrypted state, the present invention is not limited to this, and the header information may be encrypted or omitted. In the case of omitting the header information, data included in the header information is separately stored in the nonvolatile storage device 1230 or the nonvolatile protected memory 1206.

For the encryption of the protected data body, common key cryptography such as DES (Data Encryption Standard) or AES (Advanced Encryption Standard), public key cryptography such as RSA (Rivest Shamir Adleman) or ElGamal, or a combination thereof may be employed.

Though the above describes the case where the protected data body and the verification value are encrypted together, the present invention is not limited to this. The protected data body and the verification value may be encrypted separately from each other, or only the protected data body may be encrypted. Moreover, instead of being stored in a storage area following the protected data body, the verification value may be stored in a storage area preceding the protected data body, or included in the header information. Further, instead of being included in the encrypted protected data, the verification value may be, separately from the encrypted protected data, included in a verification value list of a verification value of each set of encrypted protected data, or stored in the nonvolatile protected memory 1206 in association with the encrypted protected data.

As the hash function, an algorithm such as MD4, MD5, SHA (Secure Hash Algorithm)-1, SHA-2, or the like is available. Moreover, the verification value does not need to be a hash value, and may be a digital signature, a message authentication code (MAC), an error detection code, or an error correction code. Examples of an algorithm for computing a MAC include CBC-MAC (Cipher Block Chaining Message Authentication Code) and HMAC (Keyed-Hashing for Message Authentication Code). Examples of an algorithm for computing an error detection code include CRC (Cyclic Redundancy Check) and checksum. Examples of an algorithm for computing an error correction code include Reed-Solomon code and turbo code.

Note that the common key cryptography is described in detail in pages 8 to 19 in NPL 2, the public key cryptography is described in detail in pages 40 to 95 in NPL 2, the hash function is described in detail in pages 96 to 105 in NPL 2, the digital signature scheme is described in detail in pages 171 to 188 in NPL 1, and the message authentication code is described in detail in pages 30 to 39 in NPL 2.

The encrypted protected data 1231 and 1232 are stored in the nonvolatile storage device 1230 at the time of factory manufacturing of the appliance 110 or 111. At this time, initial data of protected data is generated and encrypted using a separate key for each appliance, as a result of which the encrypted protected data 1231 and 1232 are generated. The key used for encryption is stored in the nonvolatile protected memory 1206 in the system LSI 1200.

The nonvolatile storage device 1230 also stores a program stored in the memory 1250 or the internal protected memory 1205, though not shown. The nonvolatile storage device 1230 may further store an application other than the application A 1008 and the application B 1009, or encrypted protected data for other than the application A 1008 and the application B 1009. A program stored in the internal protected memory 1205 is stored in the nonvolatile storage device 1230 in a state of being encrypted using a predetermined key. Such a program is stored in the nonvolatile storage device 1230 at the time of factory manufacturing of the appliance 110 or 111, and loaded from the nonvolatile storage device 1230 into the memory 1250 or the internal protected memory 1205 upon system startup or when a request to start an application is made.

The key for encrypting the program stored in the internal protected memory 1205 may be the same for all appliances, or different for each system LSI 1200 or for each program. A key for decrypting the encrypted program may be stored in a key storage unit (not shown) included in the system LSI 1200, stored in the nonvolatile protected memory 1206, or stored in the nonvolatile storage device 1230 in a state of being encrypted using a key stored in the system LSI 1200.

The memory 1250 includes a normal memory area 1220 and a trusted memory area 1240.

The normal memory area 1220 stores a general-purpose OS 1221, a download control application 1222, an application A 1223, an application B 1224, download control application data 1225, application A data 1226, and application B data 1227.

The trusted memory area 1240 stores application A protected data 1241 and application B protected data 1242. The trusted memory area 1240 is a memory area accessible only by an application that uses protected data stored in the trusted memory area 1240. The trusted memory control unit 1203 controls whether or not the trusted memory area 1240 is accessible.

The appliance 110 or 111 further includes an input/output unit and the like not shown in FIG. 3, but these are not main features of the present invention and so their description is omitted. The system LSI 1200 further includes a peripheral circuit and the like not shown in FIG. 3, but these are not main features of the present invention and so their description is omitted.

### (Structure of the System LSI 1200)

The following describes the components of the system LSI 1200 in Embodiment 1 of the present invention in detail.

The CPU 1201 controls an operation of the entire appliance 110 or 111, by executing an instruction code included in a program and the like stored in the memory 1250 and the internal protected memory 1205. The CPU 1201 has, as an operating mode, two modes that are a privileged mode and an unprivileged mode. The general-purpose OS (including the device drivers) 1001 runs in the privileged mode, whereas the download control application 1007, the application A 1008, and the application B 1009 run in the unprivileged mode. The privileged mode mentioned here is a mode in which a general-purpose OS is operable. In the privileged mode, a resource or a memory area that cannot be accessed by an application running in the unprivileged mode is accessible. That is, an application running in the privileged mode is associated with not only a resource or a memory area that can be accessed by an application running in the unprivileged mode, but also a resource or a memory area that can be accessed only by an application running in the privileged mode. The privileged mode is called a kernel mode, a master mode, a supervisor mode, or the like, while the unprivileged mode is called a user mode or the like.

The IPL 1202 is a program that is started first when the appliance 110 or 111 is powered on, and starts a secure OS 1210 loaded in the internal protected memory 1205 and the general-purpose OS 1221 loaded in the memory 1250. The IPL 1202 is stored in a mask ROM included in the system LSI 1200.

The trusted memory control unit 1203 controls access to the trusted memory area 1240. The trusted memory control unit 1203 will be described in detail later, with reference to a diagram.

The execution environment switching unit 1204 realizes a function of switching between the normal environment and the protected environment of the system LSI 1200. The execution environment switching unit 1204 performs access control so that the CPU 1201 and the like can access the internal protected memory 1205 or the nonvolatile protected memory 1206 only when the execution environment of the system LSI 1200 is the protected environment. The execution environment switching unit 1204 holds state information indicating whether the execution environment of the system LSI 1200 is the normal environment or the protected environment, and notifies the trusted memory control unit 1203 of the state information of the execution environment.

The internal protected memory 1205 stores the secure OS 1210, a secure boot unit 1211, a memory setting unit 1212, and a cryptographic processing unit 1213.

The nonvolatile protected memory 1206 stores a key A 1214 and a key B 1215. The key A 1214 is a key used for encryption and decryption of the application A encrypted protected data 1231, and the key B 1215 is a key used for encryption and decryption of the application B encrypted protected data 1232.

Though the above describes the case where the nonvolatile protected memory 1206 stores the key A 1214 and the key B 1215, the present invention is not limited to this, and the nonvolatile protected memory 1206 may store only one of the key A 1214 and the key B 1215, or store another key or data. Moreover, the key A 1214 and the key B 1215 may be encrypted using another key M, where the encrypted keys A and B are stored in the nonvolatile storage device 1230 and only the key M is stored in the nonvolatile protected memory 1206. In this case, the keys A and B encrypted using the key M are stored in the nonvolatile storage device 1230 together with the encrypted protected data 1231 and 1232, at the time of factory manufacturing of the appliance 110 or 111. The nonvolatile protected memory 1206 may further store a program stored in the internal protected memory 1205.

### (Structure of the Application Distribution Server 120)

FIG. 5 is a diagram of a structure of the application distribution server 120 in Embodiment 1 of the present invention.

In FIG. 5, the application distribution server 120 includes an application holding unit 2000, an application reception unit 2001, and an application transmission unit 2002.

The application holding unit 2000 stores an application managed by the application distribution server 120.

The application reception unit 2001 communicates with the development apparatus 130 connected via the network, and receives an application uploaded from the development apparatus 130. The application reception unit 2001 passes the received application to the application holding unit 2000, and requests the application holding unit 2000 to hold and manage the application.

The application transmission unit 2002 communicates with the appliance 110 connected via the network, and obtains an application requested by the appliance 110 from the application holding unit 2000 and transmits the obtained application. The application transmission unit 2002 also generates a list of applications held in the application holding unit 2000, and transmits the generated list to the appliance 110.

### (Structure of the Development Apparatus 130)

FIG. 6 is a diagram of a structure of the development apparatus 130 in Embodiment 1 of the present invention.

In FIG. 6, the development apparatus 130 includes a package generation unit 3000, a configuration file generation unit 3001, a key pair holding unit 3002, a key pair generation unit 3003, a debugging unit 3004, and an uploading unit 3005.

The package generation unit 3000 compiles a source code generated by the developer, and generates a package file by adding an application signature, a configuration file, or a public key certificate to a compiled application. The package generation unit 3000 will be described in detail later.

Note that the application signature (digital signature) scheme is described in detail in pages 171 to 188 in NPL 1, and the public key certificate is described in detail in NPL 3.

The configuration file generation unit 3001 generates the configuration file added to the application. The configuration file includes various information such as information indicating which resource of the appliance is used, information about the developer, and information indicating what kind of service is provided to another application. These information are generated based on a value set by the developer of the application.

The key pair holding unit 3002 holds keys-(a key pair of a private key and a public key in the public key cryptography) used for generating and verifying the application signature added to the package. The public key is held in a public key certificate format described in NPL 3 (ITU-T Recommendation X.509).

The key pair generation unit 3003 generates the key pair of the private key and the public key in the public key cryptography.

Note that the public key cryptography is described in detail in pages 107 to 130 in NPL 1.

The debugging unit 3004 communicates with the appliance 111 connected with the development apparatus 130 according to the USB standard or the like, and performs a process for debugging the application generated by the developer. The process for debugging includes installation of the application using the generated package, execution of the installed application, setting of a break point, obtainment of a log output, and so on.

The uploading unit 3005 communicates with the application distribution server 120 connected with the development apparatus 130 via the network, and uploads the package generated by the package generation unit 3000 to the application distribution server 120.

### (Structure of the Package Generation Unit 3000)

FIG. 7 is a diagram of a structure of the package generation unit 3000 in Embodiment 1 of the present invention.

In FIG. 7, the package generation unit 3000 includes a compiler 3100, a linker 3101, and a package generation tool 3102.

The compiler 3100 compiles an inputted program source code 3110, to generate an object file.

The linker 3101 links the object file generated by the compiler 3100 and a library to each other, to generate a file (program file) executable by the appliance 110 or 111.

The package generation tool 3102 generates a download package 3111 from the program file generated by the linker 3101, a configuration file 3114 generated by the configuration file generation unit 3001, and a private key 3112 and a public key certificate 3113 held in the key pair holding unit 3002.

### (Structure of the Download Package 3111)

FIG. 8 is a diagram of a structure of the download package 3111 in Embodiment 1 of the present invention.

In FIG. 8, the download package 3111 includes an application 3202, a device driver 3203, a configuration file 3204, an application signature list 3205, and a public key certificate 3206.

The application 3202 and the device driver 3203 are a program file generated from the program source code 3110 generated by the developer, using the compiler 3100 and the linker 3101.

The configuration file 3204 is the same as the configuration file 3114 provided to the package generation tool 3102.

The application signature list 3205 is a list of signatures each corresponding to a different one of the application 3202, the device driver 3203, and the configuration file 3204. When generating the download package 3111, the package generation tool 3102 generates a signature from each of the received application 3202, device driver 3203, and configuration file 3204, thereby generating the application signature list 3205. The private key 3112 is used for generating these signatures.

The public key certificate 3206 is the same as the public key certificate 3113 provided to the package generation tool 3102.

Though the above describes the case where the download package 3111 includes one application 3202, one device driver 3203, one configuration file 3204, one application signature list 3205, and one public key certificate 3206, the present invention is not limited to this, and each file may be one or more than one in number. Besides, there may be a file omitted from the download package 3111.

### (Secure Boot Process)

The appliance 110 or 111 verifies whether or not the general-purpose OS 1001 or software running in the protected environment 1100 is tampered with, upon activation of the appliance.

The following describes a method (secure boot process) from when the appliance 110 or 111 is powered on to when the general-purpose OS 1001 is started, with reference to a flowchart in FIG. 9.

When the appliance 110 or 111 is powered on, the IPL 1202 in the system LSI 1200 is started.

First, the IPL 1202 initializes hardware of the appliance 110 or 111 (Step S1000). In the initialization, processes such as operation check of the memory 1250, initialization of the execution environment switching unit 1204, initialization of a peripheral circuit (not shown), or the like are performed. After this, the secure OS 1101 is started.

The secure OS 1101 initializes the protected environment (creates a secure software execution environment) so that an application is operable in the protected environment. The secure OS 1101 then loads the secure boot unit 1102 (Step S1001), and starts the secure boot unit 1102. Since the secure boot unit 1102 is stored in the nonvolatile storage device 1230 in an encrypted state, the execution environment switching unit 1204 decrypts the encrypted secure boot unit 1102 using a key unique to the system LSI 1200, and loads the decrypted secure boot unit 1102 into the internal protected memory 1205.

The secure boot unit 1102 verifies the secure boot unit 1102 (Step S1002). In detail, the secure boot unit 1102 generates a hash value of the program, and compares the generated hash value with a reference hash value computed beforehand, to verify whether or not the secure boot unit 1102 is tampered with. The reference hash value is computed before factory shipment, and embedded in the secure boot unit 1102. The secure boot unit 1102 is encrypted with the reference hash value being embedded therein, and stored in the nonvolatile storage device 1230.

Though the above describes the case where a hash value is used for program verification, the present invention is not limited to this, and a method that uses a signature instead of a hash value may be used. In such a case, the secure boot unit 1102 may be encrypted with a public key used for signature verification being embedded therein, and stored in the nonvolatile storage device 1230. Alternatively, the public key may be stored in the nonvolatile storage device 1230 separately from the secure boot unit. Further, the public key may be obtained from another apparatus outside the appliance.

In the case of determining that the secure boot unit 1102 is not tampered with as a result of verifying the secure boot unit 1102 in Step S1002, the secure boot unit 1102 determines "OK" in Step S1003, and goes to Step S1004. In the case of determining that the secure boot unit 1102 is tampered with as a result of verifying the secure boot unit 1102 in Step S1002, the secure boot unit 1102 determines "NG" in Step S1003, and goes to Step S1006.

In the case of determining "OK" in Step S1003, the secure boot unit 1102 verifies the general-purpose OS 1001 (Step S1004). The same verification method as in Step S1002 is used here.

In the case of determining that the general-purpose OS 1001 is not tampered with as a result of verifying the general-purpose OS 1001 in Step S1004, the secure boot unit 1102 determines "OK" in Step S1005, ends the process, and returns control to the secure OS 1101. In the case of determining that the general-purpose OS 1001 is tampered with as a result of verifying the general-purpose OS 1001 in Step S1004, the secure boot unit 1102 determines "NG" in Step S1005, and goes to Step S1006.

In the case of determining "NG" in Step S1003 or S1005, the secure boot unit 1102 sets a secure boot failure flag (Step S1006). The secure boot failure flag is data (not shown) retained in a specific area in the internal protected memory 1205. The secure OS 1101 or an application running on the secure OS 1101 recognizes the state of the appliance 110 or 111 by checking the secure boot failure flag, and determines whether or not to run.

After Step S1006, the secure boot unit 1102 returns control to the secure OS 1101.

When control returns from the secure boot unit 1102, the secure OS 1101 returns control to the IPL 1202.

The IPL 1202 loads the general-purpose OS 1001 stored in the nonvolatile storage device 1230 into the normal memory area 1220 in the memory 1250 (Step S1007), and executes (starts) the general-purpose OS 1001.

Note that the secure boot process may employ a secure boot defined in Mobile Phone WG (hereafter referred to as "MPWG") of the Trusted Computing Group (hereafter referred to as "TCG").

### (Protected Data Management Method)

The appliance 110 or 111 stores protected data used by the application A 1008 or the application B 1009, in the nonvolatile storage device 1230 in an encrypted state.

When the application A 1008 or the application B 1009 uses the protected data, upon receiving a read request from the application A 1008 or the application B 1009, the appliance 110 or 111 reads the encrypted protected data stored in the nonvolatile storage device 1230, decrypts the encrypted protected data, and loads the decrypted protected data into the trusted memory area 1240 in the memory 1250.

When the application A 1008 or the application B 1009 ends the use of the protected data, upon receiving a write request from the application A 1008 or the application B 1009, the appliance 110 or 111 encrypts the protected data loaded in the trusted memory area 1240, and stores the encrypted protected data in the nonvolatile storage device 1230.

The following describes a protected data reading method and a protected data writing method in detail, with reference to flowcharts in FIGS. 10 to 13.

### (Protected Data Reading Process)

The following describes a protected data reading process of the application A 1008 in Embodiment 1 of the present invention, with reference to the flowchart in FIG. 10.

The application A 1008 requests the nonvolatile memory management unit 1003 in the general-purpose OS 1001 to read protected data (Step S1010). Here, the application A 1008 notifies the nonvolatile memory management unit 1003 of a file name (including a folder name) of the protected data to be read, together with the request.

The nonvolatile memory management unit 1003 checks whether or not the data requested by the application A 1008 is protected data (Step S1011). To do so, the nonvolatile memory management unit 1003 employs a method of checking whether or not the folder name included in the file name indicates a predetermined folder dedicated to protected data storage. In the case of checking that the data is protected data in Step S1011 (Step S1011: "OK"), the nonvolatile memory management unit 1003 requests the protected data management unit 1004 to read the protected data (Step S1012). Here, the nonvolatile memory management unit 1003 notifies the protected data management unit 1004 of the file name (including the folder name) of the protected data to be read, together with the request. In the case of checking that the data is not protected data in Step S1011, the nonvolatile memory management unit 1003 goes to Step S1017.

The folder name of the folder dedicated to protected data storage may be set at the time of system design and embedded in the nonvolatile memory management unit 1003. Alternatively, the folder name may be set by the application and notified to the nonvolatile memory management unit 1003. Further, the folder name may be included in the configuration file 3204 of the application and checked by the nonvolatile memory management unit 1003.

Upon receiving the protected data read request from the nonvolatile memory management unit 1003, the protected data management unit 1004 reads the encrypted protected data from the nonvolatile storage device 1230, and writes the read encrypted protected data to the memory 1250 (Step S1013). The protected data management unit 1004 reserves a memory area with consecutive physical addresses, as an area for writing the encrypted protected data.

The protected data management unit 1004 reserves an area for writing a result of decrypting the read encrypted protected data, in the memory 1250 (Step S1014). The reserved area is a memory area with consecutive physical addresses.

The protected data management unit 1004 requests the cryptographic processing unit 1104 to decrypt the read encrypted protected data (Step S1015). Here, the protected data management unit 1004 also notifies the cryptographic processing unit 1104 of area information (beginning physical address and size) of the area in the memory 1250 where the read encrypted protected data is loaded, and area information (beginning physical address and size) of the area in the memory 1250 reserved in Step S1014.

Upon receiving the decryption request from the protected data management unit 1004, the cryptographic processing unit 1104 decrypts the encrypted protected data in the notified address (Step S1016). In the decryption process of Step S1016, the cryptographic processing unit 1104 also sets a trusted memory in cooperation with the memory setting unit 1103 and the trusted memory control unit 1203. The decryption process will be described in detail later.

After the decryption process ends, control returns from the cryptographic processing unit 1104 to the protected data management unit 1004, then to the nonvolatile memory management unit 1003, and then to the application A 1008.

The protected data management unit 1004 manages, in list form, a combination of a data identifier notified when control returns from the cryptographic processing unit 1104, the file name notified from the nonvolatile memory management unit 1003, and the area information (beginning physical address and size) of the area in the memory 1250 reserved in Step S1014. The data identifier is an identifier for identifying the protected data loaded in the memory 1250. In the case of loading a plurality of sets of protected data in the memory 1250, a different identifier is assigned to each of the pluralité of sets of protected data.

In the case of checking that the file notified from the application A 1008 is not protected data in Step S1011 (Step S1011: "NG"), the nonvolatile memory management unit 1003 reads the data of the file from the nonvolatile storage device 1230 and loads the read data to the memory 1250, as normal data (Step S1017).

The application A 1008 accesses the read data, and processes the data.

### (Encrypted Protected Data Decryption Process (Step S1016 in FIG. 10))

The following describes an encrypted protected data decryption process (Step S1016 in FIG. 10) in Embodiment 1 of the present invention, with reference to the flowchart in FIG. 11.

The cryptographic processing unit 1104 requests the memory setting unit 1103 to set a trusted memory (Step S1020). Here, the cryptographic processing unit 1104 also notifies the memory setting unit 1103 of the area information (beginning physical address and size) of the memory area reserved for decryption, which is notified from the protected data management unit 1004.

Upon receiving the trusted memory setting request from the cryptographic processing unit 1104, the memory setting unit 1103 first generates a set value (Step S1021). The set value includes area information (beginning physical address and size) of a memory area set as a trusted memory, and an identifier (application ID) of the application A 1008 that uses the data. The memory area used as the trusted memory is the memory area reserved for decryption as indicated by the area information which is notified from the cryptographic processing unit 1104. Meanwhile, the application ID of the application A 1008 is a process ID used by the general-purpose OS 1001 for identifying the application. The process ID is obtained from a data structure (such as a process descriptor) used by the general-purpose OS 1001 for process ID management.

After generating the set value, the memory setting unit 1103 requests the trusted memory control unit 1203 to set the trusted memory (Step S1022). Here, the memory setting unit 1103 notifies the trusted memory control unit 1203 of the set value generated in Step S1021.

The trusted memory control unit 1203 sets the trusted memory area 1240, based on the set value notified from the memory setting unit 1103 (Step S1023). A detailed structure and processing flow of the trusted memory control unit 1203 will be described later, with reference to a diagram and a flowchart.

After the setting ends, control returns from the trusted memory control unit 1203 to the memory setting unit 1103 and then to the cryptographic processing unit 1104.

The cryptographic processing unit 1104 obtains the key A 1214 stored in the nonvolatile protected memory 1206 (Step S1024). The key A 1214 is stored in association with the encrypted protected data 1231. The cryptographic processing unit 1104 adds an identifier of encrypted data (the encrypted protected data 1231) to header information of the data beforehand, and manages a pair of the identifier and a key storage destination in list form.

Though the above describes the case where the association between the key A 1214 and the encrypted protected data 1231 is made by adding the identifier of the encrypted data to the header information of the data beforehand and managing the pair of the identifier and the key storage destination in list form, the present invention is not limited to this. The identifier may be a hash value of the encrypted protected data, or the application ID.

The cryptographic processing unit 1104 decrypts the encrypted protected data 1231 (Step S1025). The cryptographic processing unit 1104 loads the decrypted data into the trusted memory set in Step S1023.

The cryptographic processing unit 1104 further verifies the decrypted protected data (Step S10026). The verification is performed as follows. The cryptographic processing unit 1104 first computes a hash value of the decrypted protected data (protected data body), and then compares the computed hash value with the verification value (decrypted verification value) included in the encrypted protected data 1231. Depending on whether or not the two values match, the cryptographic processing unit 1104 determines whether or not the protected data is tampered with.

In the case of determining that the protected data is not tampered with as a result of the verification in Step S1026, the cryptographic processing unit 1104 determines "OK" in Step S1027, and generates the data identifier (Step S1028). The cryptographic processing unit 1104 manages, in list form, a combination of the generated data identifier, the key used for decryption, and the area information of the memory area for decryption notified from the protected data management unit 1004.

In the case of determining that the protected data is tampered with as a result of the verification in Step S1026, the cryptographic processing unit 1104 determines "NG" in Step S1027, and requests the memory setting unit 1103 to cancel the setting of the trusted memory (Step S1029). When requesting the setting cancellation, the cryptographic processing unit 1104 notifies the memory setting unit 1103 of the area information (beginning physical address and size) indicating the area the setting of which is to be canceled. The memory setting unit 1103 requests the trusted memory control unit 1203 to cancel the trusted memory setting.

The trusted memory control unit 1203 cancels the trusted memory setting of the area indicated by the notified area information (Step S1030).

After the setting cancellation ends, control returns from the trusted memory control unit 1203 to the memory setting unit 1103 and then to the cryptographic processing unit 1104.

Though the above describes the case where the decryption process is performed after the trusted memory setting, the present invention is not limited to this. The trusted memory setting may be performed after the decryption process. Here, in the case of determining "OK" in Step S1027, the trusted memory setting is performed in addition to the data identifier generation (Step S1028). In the case of determining "NG" in Step S1027, no process is performed.

### (Protected Data Writing Process)

The following describes a protected data writing process of the application A 1008 in Embodiment 1 of the present invention, with reference to the flowchart in FIG. 12.

The application A 1008 requests the nonvolatile memory management unit 1003 in the general-purpose OS 1001 to write the protected data (Step S1040). Here, the application A 1008 notifies the nonvolatile memory management unit 1003 of the file name (including the folder name) of the protected data to be written, together with the request.

The nonvolatile memory management unit 1003 checks whether or not the data requested by the application A 1008 is protected data (Step S1041). To do so, the nonvolatile memory management unit 1003 employs a method of checking whether or not the folder name included in the file name indicates the folder dedicated to protected data storage, as in the protected data reading process (Step S1011). The folder name of the folder dedicated to protected data storage is embedded in the nonvolatile memory management unit 1003 before factory shipment. In the case of checking that the data is protected data in Step S1041 (Step S1041: "OK"), the nonvolatile memory management unit 1003 requests the protected data management unit 1004 to write the protected data (Step S1042). Here, the nonvolatile memory management unit 1003 notifies the protected data management unit 1004 of the file name (including the folder name) of the protected data to be written, together with the request. In the case of checking that the data is not protected data in Step S1041 (Step S1041: "NG"), the nonvolatile memory management unit 1003 goes to Step S1046.

Upon receiving the protected data write request from the nonvolatile memory management unit 1003, the protected data management unit 1004 first requests the cryptographic processing unit 1104 to encrypt the data in the trusted memory (Step S1043). Here, the protected data management unit 1004 obtains the data identifier based on the file name of the protected data to be written, and notifies the cryptographic processing unit 1104 of the data identifier together with the request. The protected data management unit 1004 also reserves a memory area for storing the encrypted protected data, and notifies the cryptographic processing unit 1104 of area information (beginning physical address and size) of the memory area. The reserved area is a memory area with consecutive physical addresses.

Upon receiving the encryption request from the protected data management unit 1004, the cryptographic processing unit 1104 obtains area information corresponding to the notified data identifier, from the list of the combination of the data identifier and the area information generated at the time of protected data decryption. The cryptographic processing unit 1104 then encrypts the protected data in the corresponding area in the trusted memory (Step S1044). The cryptographic processing unit 1104 stores the encrypted protected data in the notified area. In the encryption process of Step S1044, the cryptographic processing unit 1104 also cancels the setting of the trusted memory in cooperation with the memory setting unit 1103 and the trusted memory control unit 1203. The encryption process will be described in detail later.

After the encryption process ends, control returns from the cryptographic processing unit 1104 to the protected data management unit 1004.

The protected data management unit 1004 writes the encrypted protected data to the file (Step S1045). After the writing ends, the protected data management unit 1004 frees the area reserved as the area for loading the protected data. The area to be freed is specified from the area information managed in association with the data identifier. Following this, control returns from the protected data management unit 1004 to the nonvolatile memory management unit 1003 and then to the application A 1008.

In the case of checking that the file notified from the application A 1008 is not protected data in Step S1041 (Step S1041: "NG"), the nonvolatile memory management unit 1003 writes the data of the file to the nonvolatile storage device 1230 as normal data (Step S1046).

### (Protected Data Encryption Process (Step S1044 in FIG. 12))

The following describes the protected data encryption process (Step S1044 in FIG. 12) in Embodiment 1 of the present invention, with reference to the flowchart in FIG. 13.

Upon receiving the encryption request from the protected data management unit 1004, the cryptographic processing unit 1104 obtains the area information corresponding to the notified data identifier, from the list of the combination of the data identifier, the key, and the area information generated at the time of protected data decryption. The cryptographic processing unit 1104 first computes a hash value of the area, to generate a verification value (Step S1050). The generated verification value is added at the end of the data.

The cryptographic processing unit 1104 obtains the key A 1214 stored in the nonvolatile protected memory 1206 (Step S1051). In detail, the cryptographic processing unit 1104 obtains the key A 1214 as the key corresponding to the notified data identifier, based on the list of the combination of the data identifier, the key, and the area information generated at the time of protected data decryption.

The cryptographic processing unit 1104 encrypts the protected data in the trusted memory, using the obtained key A 1214 (Step S1052). When doing so, the cryptographic processing unit 1104 also encrypts the verification value added at the end of the protected data. The cryptographic processing unit 1104 stores the encrypted protected data in the area notified from the protected data management unit 1004.

The cryptographic processing unit 1104 requests the memory setting unit 1103 to cancel the trusted memory setting of the area in which the protected data subjected to the encryption is stored (Step S1053). When requesting the setting cancellation, the cryptographic processing unit 1104 notifies the memory setting unit 1103 of the area information (beginning physical address and size) indicating the area the setting of which is to be canceled. The memory setting unit 1103 requests the trusted memory control unit 1203 to cancel the trusted memory setting.

The trusted memory control unit 1203 cancels the trusted memory setting of the area indicated by the notified area information (Step S1054).

After the setting cancellation ends, control returns from the trusted memory control unit 1203 to the memory setting unit 1103 and then to the cryptographic processing unit 1104. The memory setting unit 1103 manages the area the setting of which is canceled, as a free space.

### (Structure of the Trusted Memory Control Unit 1203)

FIG. 14 is a diagram of a structure of the trusted memory control unit 1203 in Embodiment 1 of the present invention.

In FIG. 14, the trusted memory control unit 1203 includes an access determination unit 1300, an area determination unit 1301, a mode determination unit 1302, and a program and area correspondence determination unit 1303.

The access determination unit 1300 detects access to the memory 1250. In the case where the access is access to the trusted memory area 1240, the access determination unit 1300 determines whether or not the access is from an application associated with the accessed area, to determine whether to permit or deny the access.

The area determination unit 1301 determines, upon detecting access from inside the system LSI 1200 to the memory 1250, whether the access is access to the normal memory area 1220 or the trusted memory area 1240. In the case where the access is access to the trusted memory area 1240, the area determination unit 1301 further determines which area in the trusted memory area 1240 is accessed.

The mode determination unit 1302 determines whether the program that accesses the memory 1250 is a program (application) running in the unprivileged mode or a program (device driver, general-purpose OS) running in the privileged mode.

The program and area correspondence determination unit 1303 determines whether or not the application (program) that accesses the memory 1250 is the application associated with the accessed area. Here, the program and area correspondence determination unit 1303 obtains information about the accessed area, from the area determination unit 1301.

The following describes each of the access determination unit 1300, the area determination unit 1301, the mode determination unit 1302, and the program and area correspondence determination unit 1303 in detail, with reference to diagrams.

### (Structure of the Access Determination Unit 1300)

FIG. 15 is a diagram of a structure of the access determination unit 1300 in Embodiment 1 of the present invention.

In FIG. 15, the access determination unit 1300 includes an access control unit 1310, a validity flag holding unit 1311, a determination unit 1312, and a setting unit 1313.

The access control unit 1310 is connected to the dedicated external bus that connects the system LSI 1200 and the memory 1250 and to an internal bus of the system LSI 1200, and relays data between the internal bus and the dedicated external bus. When the memory 1250 is accessed from the internal bus side, the access control unit 1310 performs access control of permitting or denying the access, according to a determination result of the determination unit 1312. The access control unit 1310 exercises this access control, only when a validity flag held in the validity flag holding unit 1311 indicates "valid". When the validity flag indicates "invalid", the access control unit 1310 permits every access, without performing the access control.

The validity flag holding unit 1311 holds the validity flag indicating whether the access control by the access control unit 1310 is to be performed (valid) or not (invalid).

The determination unit 1312 determines, when the memory 1250 is accessed from the internal bus side, whether to permit or deny the access. When determining the permission or denial, the determination unit 1312 references determination results of the area determination unit 1301, the mode determination unit 1302, and the program and area correspondence determination unit 1303. The determination process will be described in detail later, wit reference to a flowchart.

The setting unit 1313 changes a state of the validity flag held in the validity flag holding unit 1311. The change of the state is made by a program (the memory setting unit 1103) running in the protected environment 1100. The setting unit 1313 changes the state of the validity flag held in the validity flag holding unit 1311, to a notified state. The setting unit 1313 changes the state of the validity flag, only when an execution environment identification signal notified from the execution environment switching unit 1204 indicates the protected environment.

The access determination unit 1300 may include only the access control unit 1310 and the determination unit 1312, while omitting the validity flag holding unit 1311 and the setting unit 1313. In such a case, when the memory 1250 is accessed from the internal bus side, the access control unit 1310 immediately requests the determination unit 1312 to make the determination, and performs the access control of permitting or denying the access according to the determination result.

### (Structure of the Area Determination Unit 1301)

FIG. 16 is a diagram of a structure of the area determination unit 1301 in Embodiment 1 of the present invention.

In FIG. 16, the area determination unit 1301 includes a determination unit 1320, an address obtainment unit 1321, an address holding unit 1322, a setting unit 1323, and an area number notification unit 1324.

The determination unit 1320 determines, when the memory 1250 is accessed from the internal bus side, whether or not a physical address of a destination of the access indicates an area set as a trusted memory. Here, the determination unit 1320 obtains the physical address of the access destination from the address obtainment unit 1321, and information (physical address) of the area set as the trusted memory from the address holding unit 1322. The determination process will be described in detail later, with reference to a flowchart.

The address obtainment unit 1321 obtains the physical address of the access destination, from access information when the memory 1250 is accessed from the internal bus side. The access information includes the physical address of the access destination, an attribute (read, write, execute), and an operating mode (privileged mode, unprivileged mode).

The access information may further include information indicating from which circuit (CPU or peripheral circuit) the access is made, and information indicating whether the execution environment is the normal environment or the protected environment.

The address holding unit 1322 holds the physical address of the area set as the trusted memory. In detail, the address holding unit 1322 holds information including a beginning physical address (start address) and a size of the area set as the trusted memory, and a flag (valid/invalid flag) indicating whether or not the setting of the area is valid. In the case where a plurality of trusted memories are set, the address holding unit 1322 manages each combination of a beginning physical address and a size, as an address list. The address holding unit 1322 also manages an area number for identifying each area. As shown in FIG. 17A, the address list has a list structure in which each combination is made up of a valid/invalid flag, an area number, a beginning physical address (start address), and a size.

The setting unit 1323 changes the setting of the area information (beginning physical address, size, and valid/invalid flag) held in the address holding unit 1322. The change of the area information is made only by a program (the memory setting unit 1103) running in the protected environment 1100. The setting unit 1323 changes the area information held in the address holding unit 1322, to notified area information. The setting unit 1323 changes the area information, only when the execution environment identification signal notified from the execution environment switching unit 1204 indicates the protected environment.

The area number notification unit 1324 notifies an area number of an area determined as a trusted memory by the determination unit 1320, to another determination unit.

Note that the area number notification unit 1324 may be omitted in the case where only one area can be set as a trusted memory. Since there is only one area, another determination unit is able to specify that area when the physical address of the access destination indicates the trusted memory.

The address list held in the address holding unit 1322 may instead have a list structure in which each combination is made up of a valid/invalid flag, an area number, a start address, and an end address, as shown in FIG. 17B.

### (Structure of the Mode Determination Unit 1302)

FIG. 18 is a diagram of a structure of the mode determination unit 1302 in Embodiment 1 of the present invention.

In FIG. 18, the mode determination unit 1302 includes a determination unit 1330 and a CPU mode obtainment unit 1331.

The determination unit 1330 determines whether or not the operating mode of the CPU is the unprivileged mode when the memory 1250 is accessed. In the case where the operating mode is the unprivileged mode, the determination unit 1330 returns "OK". In the case where the operating mode is the privileged mode, the determination unit 1330 returns "NG". Here, the determination unit 1330 obtains the operating mode of the CPU, from the CPU mode obtainment unit 1331.

The CPU mode obtainment unit 1331 obtains information of whether a program that issues an access instruction runs in the privileged mode or the unprivileged mode of the CPU when the memory 1250 is accessed, from the access information.

### (Structure of the Program and Area Correspondence Determination Unit 1303)

FIG. 19 is a diagram of a structure of the program and area correspondence determination unit 1303 in Embodiment 1 of the present invention.

In FIG. 19, the program and area correspondence determination unit 1303 includes a determination unit 1340, an application ID obtainment unit 1341, an area number obtainment unit 1342, an application ID and area correspondence holding unit 1343, and a setting unit 1344.

The determination unit 1340 obtains an application ID for identifying an application and the area number notified from the area determination unit 1301, respectively from the application ID obtainment unit 1341 and the area number obtainment unit 1342. The determination unit 1340 determines whether a program having the obtained application ID can access the memory area indicated by the obtained area number, based on an application ID and area correspondence list stored in the application ID and area correspondence holding unit 1343. The determination process will be described in detail later, with reference to a flowchart.

The application ID obtainment unit 1341 obtains the identifier (application ID) of the program that issues the access instruction when the memory 1250 is accessed. Here, the application ID is a process ID used by the general-purpose OS 1001 for identifying the application. The process ID is obtained from a data structure (such as a process descriptor) used by the general-purpose OS 1001 for process ID management.

The area number obtainment unit 1342 receives the notification of the area number from the area number notification unit 1324 in the area determination unit 1301, and notifies the determination unit 1340 of the area number.

The application ID and area correspondence holding unit 1343 holds a list of each combination of an area number and an application ID of an application permitted to access an area of the area number, as the application ID and area correspondence list. As shown in FIG. 20A, the application ID and area corresponding list has a list structure in which each combination is made up of an area number and an application ID.

The setting unit 1344 changes a correspondence relation of an area number and an application ID held in the application ID and area correspondence holding unit 1343. This change is made by a program (the memory setting unit 1103) running in the protected environment 1100. The setting unit 1344 changes the correspondence relation of the area number and the application ID held in the application ID and area correspondence holding unit 1343, to a notified correspondence relation of an area number and an application ID. The setting unit 1344 changes the correspondence relation of the area number and the application ID, only when the execution environment identification signal notified from the execution environment switching unit 1204 indicates the protected environment.

Note that the area number obtainment unit 1342 may be omitted in the case where only one area can be set as a trusted memory. In such a case, the application ID and area correspondence list is a list of only application IDs, or a list including only one application ID.

Though the above describes the case where the application ID and area correspondence list has a list structure in which each combination is made up of an area number and an application ID, the present invention is not limited to this. A valid/invalid flag, an area number, and an application ID may be managed as one combination, as in the address list 1400. Moreover, the application ID and area correspondence list may have a structure in which a plurality of application IDs can be registered for one area number. FIG. 20B shows an example of such a structure in which a plurality of application IDs can be registered. For instance, an area of a trusted memory designated by an area number "1" is shared by an application having an application ID "1001" and an application having an application ID "1104", as shown in FIG. 20B.

### (Access Determination Process of the Access Determination Unit 1300)

The following describes the access determination process of the access determination unit 1300 in Embodiment 1 of the present invention, with reference to a flowchart in FIG. 21.

The access control unit 1310 obtains the validity flag held in the validity flag holding unit 1311 (Step S1100).

The access control unit 1310 checks whether or not the validity flag indicates "valid" (Step S101).

In the case of checking that the validity flag indicates "valid" in Step S1101, the access control unit 1310 requests the determination unit 1312 to determine the access (Step S1102).

The determination unit 1312 requests the area determination unit 1301 to determine whether or not the access is access to a trusted memory (Step S1103). The determination process of the area determination unit 1301 will be described in detail later.

In the case of determining that the access is "access to trusted memory" in Step S1103, the determination unit 1312 determines "YES" in Step S1104, and obtains a determination result from the program and area correspondence determination unit 1303 (Step S1105). The determination process of the program and area correspondence determination unit 1303 will be described in detail later. In the case of determining that the access is not "access to trusted memory" in Step S1103, the determination unit 1312 determines "NO" in Step S1104, and determines the access as "permitted" (Step S1108).

The determination unit 1312 also obtains a determination result from the mode determination unit 1302 (Step S1106). The determination process of the mode determination unit 1302 has been described in detail with regard to the structure of the mode determination unit 1302.

The determination unit 1312 checks whether or not the determination results obtained from the program and area correspondence determination unit 1303 and the mode determination unit 1302 are both "OK" (Step S1107).

In the case of checking that the determination results are both "OK" in Step S1107, the determination unit 1312 determines the access as "permitted" (Step S1108). In the case of checking that at least one of the determination results is "NG" in Step S1107, the determination unit 1312 determines the access as "denied" (Step S1109).

The determination unit 1312 notifies the access control unit 1310 of the determination result (Step S1110).

In the case of determining that the validity flag indicates "invalid" in Step S1101, the access control unit 1310 determines the access as "permitted" (Step S111).

The access control unit 1310 performs access control according to the determination result (Step S1112). In the case where the determination result is "permitted", the access control unit 1310 continues the access to the memory 1250. In the case where the determination result is "denied", the access control unit 1310 stops the access to the memory 1250, and returns an error message.

Though the above describes the case where the access control unit 1310 returns an error message in the case where the determination result is "denied", the present invention is not limited to this, and the access control unit 1310 may return a specific value (for example, 0x0000 or 0xFFFF) as an access result.

### (Determination Process of the Area Determination Unit 1301 (Step S1103 in FIG. 21))

The following describes the determination process of the area determination unit 1301 (Step S1103 in FIG. 21) in Embodiment 1 of the present invention, with reference to a flowchart in FIG. 22.

The determination unit 1320 obtains the physical address of the access destination from the address obtainment unit 1321 (Step S1120).

Next, the determination unit 1320 obtains a physical address of an area set as a trusted memory, from the address holding unit 1322 (Step S1121). The obtained information includes an area number, a beginning physical address, and a size.

The determination unit 1320 determines whether or not the obtained physical address of the access destination is included in the area set as the trusted memory (Step S1122). That is, the determination unit 1320 obtains one combination of a beginning physical address and a size from the address list, and checks whether or not a condition that the physical address of the access destination is larger than the beginning physical address and smaller than a sum of the beginning physical address and the size is met. In the case where the condition is met, the determination unit 1320 determines that the physical address of the access destination is included in the trusted memory, and stores the area number. The determination unit 1320 performs this process for all valid areas in the address list held in the address holding unit 1322. In the case where the physical address of the access destination is not included in any of the areas in the address list, the determination unit 1320 determines that the physical address of the access destination is not included in the trusted memory.

In the case of determining that the physical address of the access destination is included in the trusted memory in Step S1122, the determination unit 1320 determines "YES" in Step S1123, and notifies the program and area correspondence determination unit 1303 and the like of the area number of the area including the physical address of the access destination, via the area number notification unit 1324 (Step S1124).

Lastly, the determination unit 1320 determines that the access to the memory 1250 is access to the trusted memory (Step S1125).

In the case of determining that the physical address of the access destination is not included in the trusted memory in Step S1122, the determination unit 1320 determines "NO" in Step S1123, and determines that the access to the memory 1250 is not access to the trusted memory (Step S1126).

### (Determination Process of the Program and Area Correspondence Determination Unit 1303 (Step S1105 in FIG. 21))

The following describes the determination process of the program and area correspondence determination unit 1303 (Step S1105 in FIG. 21), with reference to a flowchart in FIG. 23.

The determination unit 1340 obtains the application ID from the application ID obtainment unit 1341 (Step S1130).

The determination unit 1340 obtains the area number notified from the area determination unit 1301, from the area number obtainment unit 1342 (Step S1131).

The determination unit 1340 obtains the application ID and area correspondence list from the application ID and area correspondence holding unit 1343 (Step S1132). The obtained information includes the list in which each combination is made up of an area number and an application ID of an application permitted to access an area of the area number.

The determination unit 1340 determines whether or not the application ID obtained in Step S1130 and the area number obtained in Step S1131 form a combination included in the application ID and area correspondence list obtained in Step 51132 (Step S1133). In detail, the determination unit 1340 checks whether or not the area number obtained in Step S1131 is included in the application ID and area correspondence list. In the case where the area number obtained in Step S1131 is included, the determination unit 1340 extracts an application ID paired with the area number, from the application ID and area correspondence list. The determination unit 1340 checks whether or not the extracted application ID matches the application ID obtained in Step S1130. In the case where the application IDs match, the determination unit 1340 determines that the obtained application ID and area number are included in the application ID and area correspondence list. In the case where the area number is not included in the application ID and area correspondence list or the application IDs do not match, the determination unit 1340 determines that the obtained application ID and area number are not included in the application ID and area correspondence list. In the case where a plurality of area numbers are obtained in Step S1131, the determination unit 1340 performs the above process for each of the plurality of area numbers. In the case where there is no area for which the obtained application ID and area number are determined to be included in the application ID and area correspondence list, the determination unit 1340 determines that the obtained application ID and area number are not included in the application ID and area correspondence list. Otherwise, the determination unit 1340 determines that the obtained application ID and area number are included in the application ID and area correspondence list.

In the case of determining that the obtained application ID and area number are included in the application ID and area correspondence list in Step S1133, the determination unit 1340 determines "OK" in Step S1134, and determines that the access is from an application associated with the area (Step S1135).

In the case of determining that the obtained application ID and area number are not included in the application ID and area correspondence list in Step S1133, the determination unit 1340 determines "NG" in Step S1134, and determines that the access is from an application not associated with the area (Step S1136).

### (Set Value Generation Process of the Memory Setting Unit 1103 (Step S1021 in FIG.11))

The following describes the set value generation process of the memory setting unit 1103 (Step S1021 in FIG. 11) in Embodiment 1 of the present invention, with reference to a flowchart in FIG. 24.

The memory setting unit 1103 checks the validity flag held in the validity flag holding unit 1311, before using the trusted memory area 1240 (Step S1140).

In the case of checking that the validity flag indicates "invalid" in Step S1140, the memory setting unit 1103 requests the setting unit 1313 in the access determination unit 1300 to set the validity flag held in the validity flag holding unit 1311 to "valid" (Step S1141).

In the case of checking that the validity flag indicates "valid" in Step S1140 or after performing Step S1141, the memory setting unit 1103 goes to Step S1142.

The memory setting unit 1103 obtains, from among area numbers managed in the memory setting unit 1103, an unused area number not set in the trusted memory control unit 1203, as an area number of a trusted memory (Step S1142). The number of area numbers is specified at the time of system design. Each area number is managed in an area number management table, together with a flag indicating "used" or "unused" and area information (beginning physical address and size) set for the area number.

The memory setting unit 1103 generates a set value for the area determination unit 1301, by forming one combination of the area number obtained in Step S1142 and the area information (beginning physical address and size) of the memory area reserved for decryption as notified from the cryptographic processing unit 1104 upon the trusted memory setting request (Step S1143).

The memory setting unit 1103 generates a set value for the program and area correspondence determination unit 1303, by forming one combination of the area number obtained in Step S1142 and the application ID obtained from the general-purpose OS 1001 (Step S1144).

When generating the set value for the area determination unit 1301 in Step S1143, the memory setting unit 1103 may check whether or not the area indicated by the area information notified from the cryptographic processing unit 1104 overlaps with a valid area, and return an error message in the case where the area overlaps with the valid area. Thus, the memory setting unit 1103 may generate the set value so that only a non-overlapping area is set as the trusted memory.

Moreover, when generating the set value for the program and area correspondence determination unit 1303 in Step S1144, the memory setting unit 1103 may check, in the case where the area to be set as the trusted memory overlaps with another area, whether or not the application ID is different, and return an error message in the case where the application ID is different. The memory setting unit 1103 may generate the set value including the application ID only for a non-overlapping area. The memory setting unit 1103 may generate the set value in an overlapping state, in the case where the application ID is the same.

### (Setting Cancellation Request Process of the Memory Setting Unit 1103)

The following describes the setting cancellation request process of the memory setting unit 1103 in Embodiment 1 of the present invention, with reference to a flowchart in FIG. 25.

The memory setting unit 1103 obtains the area number, from the area information that is notified from the cryptographic processing unit 1104 and indicates the area the setting of which is to be canceled (Step S1150).

The memory setting unit 1103 requests the trusted memory control unit 1203 to set the valid/invalid flag of the area number obtained in Step S1150, to invalid (Step S1151).

The memory setting unit 1103 references the area number management table, to check whether or not the setting of all areas is canceled and all areas are in an unused state (Step S1152).

In the case of determining that the setting of all areas is canceled in Step S1152, the memory setting unit 1103 determines "YES", and sets the validity flag held in the validity flag holding unit 1311 to "invalid" (Step S1153).

In the case of determining that the setting of all areas is not canceled in Step S1152, the memory setting unit 1103 determines "NO", and ends the process.

The above describes the case where the memory setting unit 1103 requests the trusted memory control unit 1203 to set the area to invalid in Step S1151. After this process (Step S1151), the memory setting unit 1103 may perform a process of writing a different value (for example, bits which are all "0", bits which are all "1", a random number, or a predetermined bit pattern) over the area which has been set as the trusted memory. Such a process may be performed not by the memory setting unit 1103 but by the trusted memory control unit 1203. In the case where the trusted memory control unit 1203 performs the process, the trusted memory control unit 1203 may perform the process after Step S1151, or upon receiving the request in Step S1151. In the case where the trusted memory control unit 1203 performs the process upon receiving the request in Step S1151, the trusted memory control unit 1203 may perform the process before or after changing the setting to "invalid".

As described above, according to Embodiment 1 of the present invention, a device driver runs in the privileged mode whereas an application runs in the unprivileged mode, and the trusted memory area is accessible only by an application. This can prevent an unauthorized device driver from unauthorizedly accessing data used by an application, or tampering with an attribute table for determining memory access permission or denial so that an unauthorized application can unauthorizedly access protected data.

Thus, according to Embodiment 1 of the present invention, leakage of and tampering with information assets by an unauthorized application or an unauthorized device driver can be prevented. This enables the user to securely use the appliance.

### [Embodiment 2]

In Embodiment 1 of the present invention, the determination of the access to the trusted memory area 1240 is performed using three determination units that are the area determination unit 1301, the mode determination unit 1302, and the program and area correspondence determination unit 1303 in the trusted memory control unit 1203. In Embodiment 2 of the present invention, on the other hand, the determination of the access to the trusted memory area 1240 is performed using two determination units that are the mode determination unit 1302 and a program and area determination unit 1304.

The following describes a structure and a determination process of the trusted memory control unit 1203 in Embodiment 2 of the present invention. Note that the same components as those in Embodiment 1 of the present invention are given the same reference signs and their description is omitted.

### (Structure of the Trusted Memory Control Unit 1203)

FIG. 26 is a diagram of a structure of the trusted memory control unit 1203 in Embodiment 2 of the present invention.

In FIG. 26, the trusted memory control unit 1203 includes the access determination unit 1300, the mode determination unit 1302, and the program and area determination unit 1304.

The program and area determination unit 1304 determines, when the access determination unit 1300 detects access from inside the system LSI 1200 to the memory 1250, whether the access is access to the normal memory area 1220 or to the trusted memory area 1240, and determines whether or not an application (program) that accesses the trusted memory area 1240 is an application associated with the accessed area.

The following describes each of the access determination unit 1300 and the program and area determination unit 1304 in Embodiment 2 of the present invention in detail, with reference to diagrams.

### (Structure of the Access Determination Unit 1300)

The access determination unit 1300 has the same structure as that in Embodiment 1 of the present invention, and includes the access control unit 1310, the validity flag holding unit 1311, the determination unit 1312, and the setting unit 1313.

The following only describes the determination unit 1312 that differs in operation from Embodiment 1 of the present invention.

The determination unit 1312 determines, when the memory 1250 is accessed from the internal bus side, whether to permit or deny the access. When determining the permission or denial, the determination unit 1312 references determination results of the mode determination unit 1302 and the program and area determination unit 1304. The determination process will be described in detail later.

### (Structure of the Program and Area Determination Unit 1304)

FIG. 27 is a diagram of a structure of the program and area determination unit 1304 in Embodiment 2 of the present invention.

In FIG. 27, the program and area determination unit 1304 includes a determination unit 1350, an application ID obtainment unit 1351, an address obtainment unit 1352, an application ID and address holding unit 1353, and a setting unit 1354.

The determination unit 1350 obtains an application ID (process ID) for identifying an application and a physical address of an access destination, respectively from the application ID obtainment unit 1351 and the address obtainment unit 1352. The determination unit 1350 determines whether or not a program having the obtained application ID can access a memory area indicated by the obtained physical address, based on an application ID and address correspondence list stored in the application ID and address holding unit 1353. The determination process will be described in detail later, with reference to a flowchart.

The application ID obtainment unit 1351 has the same function as the application ID obtainment unit 1341 (FIG. 19) in Embodiment 1 of the present invention, and obtains the identifier (application ID) of the program that issues an access instruction when the memory 1250 is accessed.

The address obtainment unit 1352 has the same function as the address obtainment unit 1321 (FIG. 16) in Embodiment 1 of the present invention, and obtains the physical address of the access destination from access information when the memory 1250 is accessed from the internal bus side

The application ID and address holding unit 1353 holds a list of each combination of area information (start address and size) and an application ID of an application permitted to access an area of the area information, as the application ID and address correspondence list. As shown in FIG. 28A, the application ID and address corresponding list has a list structure in which each combination is made up of an area number, a valid/invalid flag, a beginning physical address (start address), a size, and an application ID.

As an alternative, the application ID and address correspondence list held in the application ID and address holding unit 1353 may have a list structure in which each combination is made up of an area number, a valid/invalid flag, a start address, an end address, and an application ID, as shown in FIG. 28B.

The setting unit 1354 changes values of a valid/invalid flag, area information (start address and size), and an application ID held in the application ID and address holding unit 1353. This change is made by a program (the memory setting unit 1103) running in the protected environment 1100. The setting unit 1354 changes the values of the valid/invalid flag, the area information (start address and size), and the application ID held in the application ID and address holding unit 1353, to notified values. The setting unit 1354 changes the values of the valid/invalid flag, the area information (start address and size), and the application ID, only when the execution environment identification signal notified from the execution environment switching unit 1204 indicates the protected environment.

### (Access Determination Process of the Access Determination Unit 1300)

The following describes the access determination process of the access determination unit 1300 in Embodiment 2 of the present invention, with reference to a flowchart in FIG. 29. Note that the same components as those in Embodiment 1 of the present invention are given the same reference signs.

The access control unit 1310 obtains the validity flag held in the validity flag holding unit 1311 (Step S1200).

The access control unit 1310 checks whether or not the validity flag indicates "valid" (Step S1201).

In the case of checking that the validity flag indicates "valid" in Step S1201, the access control unit 1310 requests the determination unit 1312 to determine the access (Step S1202).

The determination unit 1312 requests the program and area determination unit 1304 to determine whether or not the access is access to a trusted memory from a permitted application (Step S1203). The determination process of the program and area determination unit 1304 will be described in detail later.

In the case of determining as "accessible by program" in Step S1203, the determination unit 1312 determines "OK" in Step S1204, and obtains a determination result from the mode determination unit 1302 (Step S1205). The determination process of the mode determination unit 1302 has been described in detail with regard to the structure of the mode determination unit 1302.

In the case of determining "OK" in Step S1205, the determination unit 1312 determines "OK" in Step S1206, and determines the access as "permitted" (Step S1207).

In the case of determining "NG" in Step S1205, the determination unit 1312 determines "NG" in Step S1206, and determines the access as "denied" (Step S1208).

In the case of determining as "not accessible by program" in Step S1203, the determination unit 1312 determines "NG" in Step S1204, and determines the access as "denied" (Step S1208).

In the case of determining as "outside area of trusted memory" in Step S1203, the determination unit 1312 determines "outside area" in Step S1204, and determines the access as "permitted" (Step S1207).

The determination unit 1312 notifies the access control unit 1310 of the determination result (Step S1209).

In the case of determining that the validity flag indicates "invalid" in Step S1201, the access control unit 1310 determines the access as "permitted" (Step S1210).

The access control unit 1310 performs access control according to the determination result (Step S1211). In the case where the determination result is "permitted", the access control unit 1310 continues the access to the trusted memory. In the case where the determination result is "denied", the access control unit 1310 stops the access to the trusted memory, and returns an error message.

### (Determination Process of the Program and Area Determination Unit 1304 (Step S1203 in FIG. 29))

The following describes the determination process of the program and area determination unit 1304 (Step S1203 in FIG. 29) in Embodiment 2 of the present invention, with reference to a flowchart in FIG. 30.

The determination unit 1350 obtains the application ID from the application ID obtainment unit 1351 (Step S1230).

The determination unit 1350 obtains the physical address of the access destination from the address obtainment unit 1352 (Step S1231).

The determination unit 1350 obtains one combination of a beginning physical address, a size, and an application ID, from the application ID and address correspondence list held in the application ID and address holding unit 1353 (Step S1232). Here, the determination unit 1350 checks a valid/invalid flag in the application ID and address correspondence list, and obtains only a combination designated as "valid".

The determination unit 1350 determines whether or not the physical address of the access destination obtained in step S1231 is included in an area indicated by the beginning physical address and the size obtained in Step S1232 (Step S1233). That is, the determination unit 1350 checks whether or not a condition that the physical address of the access destination is larger than the beginning physical address and smaller than a sum of the beginning physical address and the size is met. In the case where the condition is met, the determination unit 1350 determines that the physical address of the access destination is included in the trusted memory. In the case where the condition is not met, the determination unit 1350 determines that the physical address of the access destination is not included in the trusted memory.

In the case of determining that the physical address of the access destination is included in the trusted memory in Step S1233, the determination unit 1350 determines "YES" in Step S1234, and determines whether or not the application ID obtained in Step S1230 matches the application ID obtained in Step S1232 (Step S1235).

In the case of determining that the physical address of the access destination is not included in the trusted memory in Step S1233 (Step S1234: "NO") or after performing Step S1235, the determination unit 1350 determines whether or not the determination of Step S1233 is completed for all combinations designated as "valid" in the application ID and address correspondence list held in the application ID and address holding unit 1353 (Step S1236). In the case of determining that the determination of Step S1233 is completed for all combinations, the determination unit 1350 determines "YES" in Step S1236, and goes to Step S1237. In the case of determining that the determination of Step S1233 is not completed for all combinations, the determination unit 1350 determines "NO" in Step S1236, and goes to Step S1232.

In the case where the physical address of the access destination is included in an area of at least one combination in the application ID and address correspondence list, the determination unit 1350 determines "YES" in Step S1237, and goes to Step S1238.

In the case where the match is found in at least one combination in Step S1235, the determination unit 1350 determines "YES" in Step S1238, and determines that the access destination is accessible by the program (Step S1239).

In the case where the match is not found in any of the combinations in Step S1235, the determination unit 1350 determines "NO" in Step S1238, and determines that the access destination is not accessible by the program (Step S1240).

In the case where the physical address of the access destination is not included in an area of any of the combinations in the application ID and address correspondence list, the determination unit 1350 determines "NO" in Step S1237, and determines that the access destination is outside the area of the trusted memory (Step S1241).

As described above, according to Embodiment 2 of the present invention, a device driver runs in the privileged mode whereas an application runs in the unprivileged mode, and the trusted memory area is accessible only by an application. This can prevent an unauthorized device driver from unauthorizedly accessing data used by an application, or tampering with an attribute table for determining memory access permission or denial so that an unauthorized application can unauthorizedly access protected data.

Thus, according to Embodiment 2 of the present invention, leakage of and tampering with information assets by an unauthorized application or an unauthorized device driver can be prevented. This enables the user to securely use the appliance.

### [Example 1]

In Embodiment 1 of the present invention, the appliance 110 or 111 has a hardware structure in which the area of the trusted memory is provided in the same memory 1250 as the memory for storing the general-purpose OS 1001, the application A 1008, and the like. In Example 1 of the present invention, on the other hand, a memory dedicated to the trusted memory is used. The following describes the case where a trusted memory 1270 is a memory not accessible by a program (the general-purpose OS 1001) running in the privileged mode, and it is impossible to set a plurality of areas as trusted memories.

The following describes a hardware structure and a determination process of the appliance 110 or 111 in Example 1 of the present invention. Note that the same components as those in Embodiment 1 of the present invention are given the same reference signs, and their description is omitted.

### (Hardware Structure of the Appliance 110 or 111)

FIG. 31 is a diagram of a hardware structure of the appliance 110 or 111 in Example 1 of the present invention. In FIG. 31, the same components as those in FIG. 3 are given the same reference signs, and their description is omitted.

In FIG. 31, the appliance 110 or 111 includes the system LSI 1200, the nonvolatile storage device 1230, a normal memory 1260, and the trusted memory 1270. The system LSI 1200 is connected to each of the nonvolatile storage device 1230 and the normal memory 1260 via an external bus. The system LSI 1200 is also connected to the trusted memory 1270 via a dedicated external bus.

The system LSI 1200 differs from that in Embodiment 1 of the present invention only in a structure and an operation of the trusted memory control unit 1203, while the other structure of the system LSI 1200 is the same as that in Embodiment 1 of the present invention. The structure and the operation of the trusted memory control unit 1203 will be described later.

The normal memory 1260 stores the general-purpose OS 1221, the download control application 1222, the application A 1223, the application B 1224, the download control application data 1225, the application A data 1226, and the application B data 1227.

The trusted memory 1270 stores the application A protected data 1241 and the application B protected data 1242. The trusted memory 1270 is a memory area accessible only by an application. The trusted memory control unit 1203 controls whether or not the trusted memory 1270 is accessible.

### (Protected Data Management Method)

The following describes a protected data management method in Example 1 of the present invention, with reference to the explanatory diagrams (FIGS. 10 to 13) of the protected data management method in Embodiment 1 of the present invention. In FIGS. 10 to 13, only the processes different from those in Embodiment 1 of the present invention are described below, while omitting the same processes as those in Embodiment 1 of the present invention.

A protected data reading process in Example 1 of the present invention is described first, with reference to FIG. 10.

Steps S1010 to S1013 are the same as those in Embodiment 1 of the present invention, and so their description is omitted.

In Embodiment 1 of the present invention, in Step S1014, the protected data management unit 1004 reserves an area for writing a result of decrypting the read encrypted protected data, in the memory 1250. In Example 1 of the present invention, however, the trusted memory 1270 is the only memory that can be used as a trusted memory area. Accordingly, Step S1014 is a process of setting a flag for using the trusted memory 1270, instead of reserving an area in the memory 1250. As an additional process, in the case where the flag for using the trusted memory 1270 is already set, the protected data management unit 1004 does not issue a decryption request (Step S1015), and issues an end notification to the nonvolatile memory management unit 1003.

In Embodiment 1 of the present invention, in Step S1015, the protected data management unit 1004 also notifies the cryptographic processing unit 1104 of area information (beginning physical address and size) of the area in the memory 1250 reserved in Step S1014. In Example 1 of the present invention, however, no area in the memory 1250 is reserved in Step S1014. Therefore, the protected data management unit 1004 does not notify the cryptographic processing unit 1104 of area information (beginning physical address and size) of the area in the memory 1250 reserved in Step S1014.

The processes from Step S1016 are the same as those in Embodiment 1 of the present invention, and so their description is omitted.

An encrypted protected data decryption process (Step S1016) in Example 1 of the present invention is described next, with reference to FIG. 11.

In Embodiment 1 of the present invention, in Step S1020, the cryptographic processing unit 1104 also notifies the memory setting unit 1103 of the area information (beginning physical address and size) of the memory area reserved for decryption, which is notified from the protected data management unit 1004. In Example 1 of the present invention, however, the cryptographic processing unit 1104 is not notified of the area information of the memory area reserved for decryption, and therefore does not notify the memory setting unit 1103 of the area information.

In Embodiment 1 of the present invention, in Step S1021, the memory setting unit 1103 generates a set value. In Example 1 of the present invention, however, area information and an application ID are not generated. Since area information of the trusted memory 1270 is specified at the time of design, the memory setting unit 1103 does not generate area information in Step S1021. Besides, since no application ID is set in the trusted memory control unit 1203, the memory setting unit 1103 does not generate an application ID, either. Hence, Step S1021 is omitted.

In Embodiment 1 of the present invention, in Step S1022, the memory setting unit 1103 notifies the trusted memory control unit 1203 of the set value generated in Step S1021. In Example 1 of the present invention, however, Step S1021 is omitted, so that the memory setting unit 1103 does not notify the trusted memory control unit 1203 of the set value.

In Embodiment 1 of the present invention, in Step S1023, the trusted memory control unit 1203 sets the trusted memory area 1240, based on the set value notified from the memory setting unit 1103. In Example 1 of the present invention, however, the trusted memory control unit 1203 sets the whole trusted memory 1270 as a trusted memory area, based on the area information specified at the time of design.

The processes from Steps S1024 to S1028 are the same as those in Embodiment 1 of the present invention, and so their description is omitted.

In Embodiment 1 of the present invention, in Step S1029, the cryptographic processing unit 1104 notifies the memory setting unit 1103 of the area information (beginning physical address and size) indicating the area the setting of which is to be canceled. In Example 1 of the present invention, however, the cryptographic processing unit 1104 does not notify the memory setting unit 1103 of the area information.

In Embodiment 1 of the present invention, in Step S1030, the trusted memory control unit 1203 cancels the trusted memory setting of the area indicated by the notified area information. In Example 1 of the present invention, however, since the whole trusted memory 1270 is the trusted memory area, there is no notification of area information, and the trusted memory control unit 1203 cancels the setting of the trusted memory 1270.

A protected data writing method in Example 1 of the present invention is described next, with reference to FIG. 12.

Steps S1040 to S1043 are the same as those in Embodiment 1 of the present invention, and so their description is omitted.

In Embodiment 1 of the present invention, in Step S1044, the cryptographic processing unit 1104 obtains area information corresponding to the notified data identifier from the list of the combination of the data identifier and the area information, and encrypts the protected data in the corresponding area in the trusted memory. In Example 1 of the present invention, however, the cryptographic processing unit 1104 encrypts the whole trusted memory 1270.

The processes from Step S1045 are the same as those in Embodiment 1 of the present invention, and so their description is omitted.

A protected data encryption process (Step S1044) in Example 1 of the present invention is described next, with reference to FIG. 13.

Steps S1050 to S1052 are the same as those in Embodiment 1 of the present invention, and so their description is omitted.

In Embodiment 1 of the present invention, in Step S1053, the cryptographic processing unit 1104 notifies the memory setting unit 1103 of the area information (beginning physical address and size) indicating the area the setting of which is to be canceled, when requesting the setting cancellation. In Example 1 of the present invention, however, since the area the setting of which is to be canceled is the whole trusted memory 1270, the cryptographic processing unit 1104 does not notify the memory setting unit 1103 of the area information.

In Embodiment 1 of the present invention, in Step S1054, the trusted memory control unit 1203 cancels the trusted memory setting of the area indicated by the notified area information. In Example 1 of the present invention, however, there is no notification of area information, and the trusted memory control unit 1203 cancels the trusted memory setting of the whole trusted memory 1270.

The subsequent processes are the same as those in Embodiment 1 of the present invention, and so their description is omitted.

### (Structure of the Trusted Memory Control Unit 1203)

FIG. 32 is a diagram of a structure of the trusted memory control unit 1203 in Example 1 of the present invention.

In FIG. 32, the trusted memory control unit 1203 includes the access determination unit 1300, the area determination unit 1301, and the mode determination unit 1302.

The following describes each of the access determination unit 1300 and the area determination unit 1301 in Example 1 of the present invention in detail, with reference to diagrams.

### (Structure of the Access Determination Unit 1300)

FIG. 33 is a diagram of a structure of the access determination unit 1300 in Example 1 of the present invention.

In FIG. 33, the access determination unit 1300 includes the access control unit 1310 and the determination unit 1312.

The access control unit 1310 is connected to the dedicated external bus that connects the system LSI 1200 and the memory 1250 and to an internal bus of the system LSI 1200, and relays data between the internal bus and the dedicated external bus. When the memory 1250 is accessed from the internal bus side, the access control unit 1310 performs access control of permitting or denying the access, according to a determination result of the determination unit 1312.

The determination unit 1312 determines, when the memory 1250 is accessed from the internal bus side, whether to permit or deny the access. When determining the permission or denial, the determination unit 1312 references determination results of the area determination unit 1301 and the mode determination unit 1302. The determination process will be described in detail later.

### (Structure of the Area Determination Unit 1301)

FIG. 34 is a diagram of a structure of the area determination unit 1301 in Example 1 of the present invention.

In FIG. 34, the area determination unit 1301 includes the determination unit 1320, the address obtainment unit 1321, and the address holding unit 1322.

The following only describes the determination unit 1320 and the address holding unit 1322 that differ in operation from Embodiment 1 of the present invention.

The determination unit 1320 determines, when the memory 1250 is accessed from the internal bus side, whether a physical address of a destination of the access indicates an area set as a trusted memory. Here, the determination unit 1320 obtains the physical address of the access destination from the address obtainment unit 1321, and information (physical address) of the area set as the trusted memory from the address holding unit 1322. The determination process will be described in detail later.

The address holding unit 1322 holds the physical address of the area set as the trusted memory. In detail, the address holding unit 1322 holds information including a beginning physical address (start address) and a size of the area set as the trusted memory. This information is stored in such an area that cannot be altered in the privileged mode. Examples of such an area include a mask ROM or a PROM in the system LSI, an internal register of the system LSI, the internal protected memory 1205, and the nonvolatile protected memory 1206.

### (Access Determination Process of the Access Determination Unit 1300)

The following describes the access determination process of the access determination unit 1300 in Example 1 of the present invention, with reference to the explanatory diagram (FIG. 21) of the access determination process of the access determination unit 1300 in Embodiment 1 of the present invention. In FIG. 21, only the processes different from those in Embodiment 1 of the present invention are described below, while omitting the same processes as those in Embodiment 1 of the present invention.

Steps S1100 to S1101 and S1111 are not performed because there is no validity flag.

Steps S1102 to S1104 are the same as those in Embodiment 1 of the present invention, and so their description is omitted.

Step S1105 is not performed in Example 1 of the present invention. In the case of determining that the access is "access to trusted memory" in Step S1103, the determination unit 1312 determines "YES" in Step S1104, and obtains a determination result from the mode determination unit 1302 (Step S1106). Step S1106 is the same as that in Embodiment 1 of the present invention.

In Embodiment 1 of the present invention, in Step S1107, the determination unit 1312 checks whether or not the determination results obtained from the program and area correspondence determination unit 1303 and the mode determination unit 1302 are both "OK". In Example 1 of the present invention, however, the determination unit 1312 checks whether or not the determination result obtained from the mode determination unit 1302 is "OK".

The processes from Step S1108 (excluding Step S1111) are the same as those in Embodiment 1 of the present invention, and so their description is omitted.

### (Determination Process of the Area Determination Unit 1301)

The following describes the determination process of the area determination unit 1301 in Example 1 of the present invention, with reference to the explanatory diagram (FIG. 22) of the determination process of the area determination unit 1301 in Embodiment 1 of the present invention. In FIG. 22, only the processes different from those in Embodiment 1 of the present invention are described below, while omitting the same processes as those in Embodiment 1 of the present invention.

Steps S1120 to S1121 are the same as those in Embodiment 1 of the present invention, and so their description is omitted.

In Embodiment 1 of the present invention, in Step S1122, the determination unit 1320 obtains one combination of a beginning physical address and a size from the address list, and checks whether or not a condition that the physical address of the access destination is larger than the beginning physical address and smaller than a sum of the beginning physical address and the size is met. The determination unit 1320 performs this process for all valid areas in the address list held in the address holding unit 1322. In Example 1 of the present invention, however, the address holding unit 1322 does not hold the address list, and only holds one combination of a beginning physical address (start address) and a size of an area set as a trusted memory. Hence, the determination unit 1320 does not repeat Steps S1121 and S1122.

The processes from Step S1123 are the same as those in Embodiment 1 of the present invention, and so their description is omitted.

As described above, according to Example 1 of the present invention, a device driver runs in the privileged mode whereas an application runs in the unprivileged mode, and the trusted memory area is accessible only by an application. This can prevent an unauthorized device driver from unauthorizedly accessing data used by an application, or tampering with an attribute table for determining memory access permission or denial so that an unauthorized application can unauthorizedly access protected data.

Thus, according to Example 1 of the present invention, leakage of and tampering with information assets by an unauthorized application or an unauthorized device driver can be prevented. This enables the user to securely use the appliance.

### [Example 2]

In Embodiment 1 of the present invention, the access determination unit 1300 determines access permission or denial using the determination result of the mode determination unit 1302. In Example 2 of the present invention, on the other hand, in the case where data transmission and reception between an application and a device driver are needed, the access determination unit 1300 determines access permission or denial without using the determination result of the mode determination unit 1302.

FIG. 35 is a diagram of a structure of the access determination unit 1300 that allows data transmission and reception between an application and a device driver.

In FIG. 35, the access determination unit 1300 includes the access control unit 1310, the validity flag holding unit 1311, the determination unit 1312, the setting unit 1313, and a device driver access permission application ID list holding unit 1314.

The following only describes the determination unit 1312 and the device driver access permission application ID list holding unit 1314 that differ in operation from Embodiment 1 of the present invention.

The determination unit 1312 determines, when the memory 1250 is accessed from the internal bus side, whether to permit or deny the access, by referencing determination results of the area determination unit 1301, the mode determination unit 1302, and the program and area correspondence determination unit 1303. In Example 2 of the present invention, when a device driver called from an application accesses the memory 1250, the application ID obtainment unit 1341 in the program and area correspondence determination unit 1303 obtains an application ID of the application calling the device driver.

The device driver access permission application ID list holding unit 1314 holds a list (device driver access permission application ID list) of an application ID of each application permitted to access a trusted memory through a device driver running in the privileged mode. As shown in FIG. 36, the device driver access permission application ID list has a structure in which application IDs are managed in list form.

### (Access Determination Process of the Access Determination Unit 1300)

The following describes the access determination process of the access determination unit 1300 in Example 2 of the present invention, with reference to the explanatory diagram (FIG. 21) of the access determination process of the access determination unit 1300 in Embodiment 1 of the present invention and FIG. 37. In FIG. 21, only Step S1107 different from that in Embodiment 1 of the present invention is described below, while omitting description of the same processes as those in Embodiment 1 of the present invention.

In Embodiment 1 of the present invention, in Step S1107, the determination unit 1312 checks whether or not the determination results obtained from the program and area correspondence determination unit 1303 and the mode determination unit 1302 are both "OK". In Example 2 of the present invention, however, in the case where the access is from an application having an application ID included in the device driver access permission application ID list, the determination unit 1312 checks whether or not the determination result obtained from the program and area correspondence determination unit 1303 is "OK". This process is described in detail below, with reference to FIG. 37.

After Step S1106, the determination unit 1312 obtains the device driver access permission application ID list from the device driver access permission application ID list holding unit 1314 (Step S1113).

The determination unit 1312 obtains the application ID from the program and area correspondence determination unit 1303 (Step S1114).

The determination unit 1312 determines whether or not the application ID obtained in Step S1114 is included in the device driver access permission application ID list obtained in Step S1113 (Step S1115).

In the case of determining that the application ID is not included in the device driver access permission application ID list in Step S1115, the determination unit 1312 determines "NO" in Step S1116, and performs Steps S1107 to S1109 as in Embodiment 1 of the present invention.

In the case of determining that the application ID is included in the device driver access permission application ID list in Step S1115, the determination unit 1312 determines "YES" in Step S1116, and checks whether or not the program and area correspondence determination unit 1303 determines "OK" (Step S1117).

In the case where the program and area correspondence determination unit 1303 determines "OK", the determination unit 1312 determines "OK" in Step S1117, and determines the access as "permitted" (Step S1108). In the case where the program and area correspondence determination unit 1303 does not determine "OK", the determination unit 1312 determines "NG" in Step S1117, and determines the access as "denied" (Step S1109).

As described above, according to Example 2 of the present invention, a device driver runs in the privileged mode whereas an application runs in the unprivileged mode, and the trusted memory area is accessible not only by an application but also by a device driver called by the application. This can prevent an unauthorized device driver not called by an application from unauthorizedly accessing data used by the application, and prevent an unauthorized device driver from tampering with an attribute table for determining memory access permission or denial so that an unauthorized application can unauthorizedly access protected data.

Thus, according to Example 2 of the present invention, leakage of and tampering with information assets by an unauthorized application or an unauthorized device driver can be prevented. This enables the user to securely use the appliance.

Moreover, in an exceptional case where data transmission and reception between an application and a device driver are needed, the trusted memory area is made accessible by the device driver, too. Note here that the device driver runs in the privileged mode.

Although the present invention has been described by way of the above embodiments, the present invention is not limited to the above embodiments. For example, the present invention also includes the following variations.

(1) All components of the trusted memory control unit 1203 in the above embodiments may be implemented by hardware. As an alternative, the components other than the access control unit 1310 and each holding unit (the validity flag holding unit 1311, the address holding unit 1322, the application ID and area correspondence holding unit 1343, the application ID and address holding unit 1353) may be implemented by software. As another alternative, components including the access control unit 1310 and each holding unit (the validity flag holding unit 1311, the address holding unit 1322, the application ID and area correspondence holding unit 1343, the application ID and address holding unit 1353) may be implemented by hardware, while implementing the other components by software.

In a non claimed example, as shown in FIG. 38, the appliance 110 or 111 in the above embodiments may have a hardware structure that at least includes the CPU 1201, the trusted memory control unit 1203, the normal memory 1260, and the trusted memory 1270.

(2) Each list (an address list 1400 or 1401, an application ID and area correspondence list 1402, an application ID and address correspondence list 1404 or 1405) in the above embodiments may be stored in a memory or a register in the trusted memory control unit 1203, stored in the internal protected memory 1205, or stored in the trusted memory area 1240 or the trusted memory 1270. Moreover, each list is not limited to table form shown in the corresponding diagram, so long as a relation as to which information is stored in which area (register) is defined at the time of design.
(3) The above embodiments describe the case where a process ID is used as the application ID. However, the present invention is not limited to this, and the application ID may be any information that enables each individual application to be identified. For example, the application ID may be a base address of a page table set in a MMU, or data (identifier) written in a specific virtual address. The application ID may also be a value set by a program running in the protected environment. In this case, the application ID obtainment unit 1341 obtains the application ID, from an area where the program running in the protected environment sets the application ID.
(4) The above embodiments describe the case where the process (Step S1122) of the area determination unit 1301 determining whether or not the physical address of the access destination is included in the address list 1400 or the process (Step S1233 or S1235) of the program and area determination unit 1304 determining whether or not the physical address of the access destination is included in the application ID and address correspondence list 1404 or 1405 and determining whether or not the corresponding application ID matches is repeatedly performed until the determination is completed for all data in the list. However, the present invention is not limited to this. Such a process may be performed in parallel through the use of hardware or a multiprocessor.
(5) The above embodiments describe the case where the encrypted protected data 1231 and 1232 are stored in the nonvolatile storage device 1230 at the time of factory manufacturing of the appliance 110 or 111. However, the present invention is not limited to this. The encrypted protected data 1231 or 1232 may be generated when the data is read first, after appliance manufacturing. In such a case, in the protected data reading process, it is checked whether or not the encrypted protected data 1231 or 1232 designated by the application A or B is already present and, in the case where the encrypted protected data is not present, a protected data generation process is carried out.

The following describes a protected data initialization process, with reference to flowcharts in FIGS. 10, 11, and 39.

In FIG. 10, in the case where the encrypted protected data 1231 or 1232 is not present, the protected data management unit 1004 skips Step S1013. The protected data management unit 1004 then requests the cryptographic processing unit 1104 to perform an initialization process, instead of Step S1015. The cryptographic processing unit 1104 accordingly performs the initialization process.

The following describes the initialization process in detail, with reference to FIG. 39.

First, the cryptographic processing unit 1104 sets a trusted memory. The setting process (Steps S1020 to S1023) is the same as that in the decryption process in FIG. 11, and so its description is omitted.

After the trusted memory setting ends, the cryptographic processing unit 1104 generates a key for encrypting protected data (Step S1031), and stores the generated key in the nonvolatile protected memory 1206.

The cryptographic processing unit 1104 initializes the area set as the trusted memory in Step S1020 (Step S1032).

Lastly, the cryptographic processing unit 1104 generates a data identifier (Step S1028), before ending the process. Step S1028 is the same as that in the decryption process in FIG. 11, and so its description is omitted.

Note that the protected data generation process may be performed upon a data initialization request instead of a data read request from the application A or B.

(6) The above embodiments describe the case where data such as the protected data 1241 and 1242 obtained by decrypting the encrypted protected data 1231 and 1232 is protected from an unauthorized application or an unauthorized device driver, by means of the trusted memory control unit 1203. However, the present invention is not limited to this. For instance, a program such as the application A 1008 or the application B 1009 may be protected by loading the application A 1008 or the application B 1009 stored in the nonvolatile storage device 1230 into the trusted memory area 1240 or the trusted memory 1270, instead of loading it into the normal memory area 1220 or the normal memory 1260.
(7) Each of the above apparatuses is actually a computer system that includes a microprocessor, a ROM, a RAM, a hard disk unit, a display unit, a keyboard, a mouse, and the like. A computer program is stored in the RAM or the hard disk unit. Functions of each of the apparatuses can be achieved by the microprocessor operating in accordance with the computer program. The computer program mentioned here is a combination of a plurality of instruction codes that represent instructions to a computer for achieving predetermined functions.
(8) The components that constitute each of the above apparatuses may be partly or wholly realized by one system LSI (Large Scale Integration). The system LSI is an ultra-multifunctional LSI produced by integrating a plurality of components on one chip, and is actually a computer system that includes a microprocessor, a ROM, a RAM, and the like. A computer program is stored in the RAM. Functions of the system LSI can be achieved by the microprocessor operating in accordance with the computer program.

The components that constitute each of the above apparatuses may each be implemented individually as one chip, or may be partly or wholly implemented on one chip.

Though the system LSI is mentioned here, it may be referred to as any of an IC, a LSI, a super LSI, or an ultra LSI, depending on the degree of integration. Moreover, the integrated circuit method is not limited to an LSI, and may be realized by a dedicated circuit or a general-purpose processor. A Field Programmable Gate Array (FPGA) that can be programmed after LSI manufacturing or a reconfigurable processor capable of reconfiguring connections and settings of circuit cells in an LSI may also be used.

Furthermore, when an integrated circuit technique that replaces an LSI emerges from advancement of semiconductor technologies or other derivative technologies, such a technique can be used for the functional block integration. For instance, biotechnology may be adapted in this way.

(9) The components that constitute each of the above apparatuses may be partly or wholly realized by an IC card or a single module that is removably connectable to the apparatus. The IC card or the module is a computer system that includes a microprocessor, a ROM, a RAM, and the like. The IC card or the module may include the above-mentioned ultra-multifunctional LSI. Functions of the IC card or the module can be achieved by the microprocessor operating in accordance with the computer program. The IC card or the module may be tamper resistant.
(10) The present invention may also be the method described above. The present invention may also be a computer program that realizes the method by a computer. The present invention may also be a digital signal formed by the computer program.

The present invention may also be a computer-readable recording medium, such as a flexible disk, a hard disk, a CD-ROM, an MO, a DVD, a DVD-ROM, a DVD-RAM, a BD (Blu-ray Disc), or a semiconductor memory, on which the computer program or the digital signal is recorded. Conversely, the present invention may be the digital signal recorded on such a recording medium.

The present invention may also be the computer program or the digital signal transmitted via an electric communication line, a wired or wireless communication line, a network such as the Internet, data broadcasting, and the like.

The present invention may also be a computer system that includes a microprocessor and a memory. In this case, the computer program may be stored in the memory, with the microprocessor operating in accordance with the computer program.

The computer program or the digital signal may be provided to another independent computer system by distributing the recording medium on which the computer program or the digital signal is recorded, or by transmitting the computer program or the digital signal via the network and the like. The independent computer system may then execute the computer program or the digital signal to function as the present invention.

(12) The above embodiments and variations may be freely combined.

### [Industrial Applicability]

The present invention is useful as an information processing apparatus or the like that includes a trusted memory control unit which prevents access from a program running when a CPU is in a privileged mode, thereby enabling data of a user to be protected even in the case where a malicious attacker runs a program in the privileged mode. The present invention is also applicable to an information processing apparatus or the like that enables an application program to be protected from an attack by a malicious attacker using a program in the privileged mode.

### [Reference Signs List]

100 Application distribution system
110, 111 Appliance
120 Application distribution server
130 Development apparatus
1000 Normal software execution environment (normal environment)
1001, 1221 General-purpose operating system (general-purpose OS)
1002 Kernel
1003 Nonvolatile memory management unit
1004 Protected data management unit
1005 Device driver A
1006 Device driver B
1007, 1222 Download control application
1008, 1223 Application A
1009, 1224 Application B
1100 Secure software execution environment (protected environment)
1101, 1210 Secure operating system (secure OS)
1102, 1211 Secure boot unit
1103, 1212 Memory setting unit
1104, 1213 Cryptographic processing unit
1200 System LSI
1201 CPU
1202 IPL (Initial Program Loader)
1203 Trusted memory control unit
1204 Execution environment switching unit
1205 Internal protected memory
1206 Nonvolatile protected memory
1220 Normal memory area
1225 Download control application data
1226 Application A data
1227 Application B data
1230 Nonvolatile storage device
1231 Application A encrypted protected data
1232 Application B encrypted protected data
1240 Trusted memory area
1241 Application A protected data
1242 Application B protected data
1250 Memory
1260 Normal memory
1270 Trusted memory
1300 Access determination unit
1301 Area determination unit
1302 Mode determination unit
1303 Program and area correspondence determination unit
1304 Program and area determination unit
1310 Access control unit
1311 Validity flag holding unit
1312 Determination unit
1313 Setting unit
1314 Device driver access permission application ID list holding unit
1320 Determination unit
1321 Address obtainment unit
1322 Address holding unit
1323 Setting unit
1324 Area number notification unit
1330 Determination unit
1331 CPU mode obtainment unit
1340 Determination unit
1341 Application ID obtainment unit
1342 Area number obtainment unit
1343 Application ID and area correspondence holding unit
1344 Setting unit
1350 Determination unit
1351 Application ID obtainment unit
1352 Address obtainment unit
1353 Application ID and address holding unit
1354 Setting unit
2000 Application holding unit
2001 Application reception unit
2002 Application transmission unit
3000 Package generation unit
3001 Configuration file generation unit
3002 Key pair holding unit
3003 Key pair generation unit
3004 Debugging unit
3005 Uploading unit
3100 Compiler
3101 Linker
3102 Package generation tool
3110 Program source code
3111 Download package
3112 Private key
3113, 3206 Public key certificate
3114, 3204 Configuration file
3202 Application
3203 Device driver
3205 Application signature list

## Claims

1. An information processing apparatus (110, 111) comprising:
a processor (1201) that has, as an operating mode, a privileged mode in which a kernel (1002) runs and an unprivileged mode in which a user program runs;
a trusted memory (1240, 1270) into which protected data is loaded when the protected data is used by the user program, the protected data being used by the user program running on said processor when said processor is in the unprivileged mode; and
a trusted memory control unit (1203) configured to control access to said trusted memory,
wherein said trusted memory control unit (1203) is configured to, when said processor accesses said trusted memory (1270):
determine the operating mode of said processor;
deny the access to said trusted memory (1270) by said processor, when the operating mode of said processor is the privileged mode; and
when permitting the access to said trusted memory (1270) by said processor, deny the access to said trusted memory (1270) by the kernel (1002) running on said processor and permit the access by the user program to the protected data loaded into said trusted memory (1270),
**characterized in that** the information processing apparatus further comprises:
a normal memory (1220, 1260) that stores one or more user programs each of which has a program identifier;
a determination program identifier storage unit configured to store a determination program identifier that is a program identifier of a user program permitted to access said trusted memory, and
an internal protected memory (1205) not accessible by any of the one or more user programs stored in said normal memory (1260),
wherein said trusted memory control unit (1203) is further configured to, when any of the one or more user programs running on said processor accesses said trusted memory (1270):
determine the operating mode of said processor;
determine whether or not a program identifier of the user program that accesses said trusted memory (1270) matches the determination program identifier stored in said determination identifier storage unit;
wherein said trusted memory control unit (1203) is configured to deny access to said trusted memory (1270) by the kernel (1003) running on said processor and permit access only by the user program which uses the protected data loaded into said trusted memory (1270), by (a) denying the access to said trusted memory (1270) by said processor, when the operating mode of said processor is the privileged mode or the program identifier of the user program that accesses said trusted memory (1270) does not match the determination program identifier, and (b) permitting the access to said trusted memory (1270) by said processor, when the operating mode of said processor is the unprivileged mode and the program identifier matches the determination program identifier,
wherein said trusted memory control unit (1203) includes
an area determination unit (1301) configured to determine whether or not said processor accesses said trusted memory (1270),
wherein said area determination unit (1301) includes an area information storage unit configured to store area information indicating an area of said trusted memory (1270),
wherein said area determination unit (1301) is configured to, when said processor accesses said trusted memory (1270) or said normal memory (1260), determine whether or not said processor accesses said trusted memory (1270), using the area information stored in said area information storage unit, and
wherein the area information is set only by a setting program stored in said internal protected memory (1205).

2. The information processing apparatus according to Claim 1,
wherein said trusted memory control unit (1203) is further configured to, when any of the one or more user programs running on said processor accesses said trusted memory (1270):
determine the operating mode of said processor;
determine whether or not a program identifier of the user program that accesses said trusted memory (1270) matches the determination program identifier stored in said determination identifier storage unit; and
permit the access to said trusted memory (1270) by said processor, in the case where the operating mode of said processor is the unprivileged mode and the program identifier matches the determination program identifier.

3. The information processing apparatus according to Claim 1 or 2,
wherein said determination program identifier storage unit is configured to store a plurality of determination program identifiers, and
said trusted memory control unit (1203) is configured to determine whether or not the program identifier of the user program that accesses said trusted memory (1270) matches any of the plurality of determination program identifiers stored in said determination identifier storage unit.

4. The information processing apparatus according to Claim 1 or 2,
wherein said normal memory (1260) stores a plurality of user programs each of which has a program identifier,
said trusted memory (1270) includes a plurality of storage areas that differ from each other,
said determination program identifier storage unit is configured to store, for each of the plurality of storage areas in said trusted memory (1270), a determination program identifier that is a program identifier of a user program permitted to access the storage area, and
said trusted memory control unit (1203) is configured to determine whether or not a program identifier of a user program that accesses any of the plurality of storage areas in said trusted memory (1270) matches a determination program identifier stored in said determination identifier storage unit in correspondence with the storage area accessed by the user program.

5. The information processing apparatus according to Claim 1, further comprising:
a nonvolatile storage device that stores encrypted protected data obtained by encrypting the protected data; and
a nonvolatile memory management unit configured to decrypt the encrypted protected data stored in said nonvolatile storage device, and write the decrypted protected data to said trusted memory (1270).

6. A memory access control method for use in an information processing apparatus according to claim 1,
said memory access control method comprises:
determining, by the trusted memory control unit (1203), the operating mode of the processor, when the processor accesses the trusted memory;
denying, by the trusted memory control unit (1203), the access to the trusted memory by the processor, in the case where the operating mode of the processor is the privileged mode; and
when permitting the access to the trusted memory by the processor, denying the access to the trusted memory by the kernel running on the processor and permitting the access by the user program to the protected data loaded into the trusted memory,
determining, by the trusted memory control unit (1203), whether or not a program identifier of the user program that accesses said trusted memory (1270) matches the determination program identifier stored in said determination identifier storage unit;
denying, by the trusted memory control unit (1203), the access to said trusted memory (1270) by the kernel (1003) running on said processor and permit access only by the user program which uses the protected data loaded into said trusted memory (1270), by (a) denying the access to said trusted memory (1270) by said processor, when the operating mode of said processor is the privileged mode or the program identifier of the user program that accesses said trusted memory (1270) does not match the determination program identifier, and (b) permitting the access to said trusted memory (1270) by said processor, when the operating mode of said processor is the unprivileged mode and the program identifier matches the determination program identifier,
determining, by said area determination unit, when said processor accesses said trusted memory (1270) or said normal memory (1260), whether or not said processor accesses said trusted memory (1270), using the area information stored in said area information storage unit, and
the area information is set only by a setting program stored in said internal protected memory (1205).

7. A program for causing a computer to control memory access,
wherein a processor of the computer has, as an operating mode, a privileged mode in which a kernel runs and an unprivileged mode in which a user program runs
a memory of the computer includes a trusted memory area into which protected data is loaded when the protected data is used by the user program, the protected data being used by a program running on the processor when the processor is in the unprivileged mode, and
said program causes the computer to execute:
the memory access control method of claim 6.

8. An integrated circuit comprising:
an information processing apparatus according to Claim 1.

## Patentansprüche

1. Informationsverarbeitungsvorrichtung (110, 111), aufweisend:
einen Prozessor (1201), der, als Betriebsmodus, einen privilegierten Modus, in dem ein Kern (1002) läuft, und einen unprivilegierten Modus, in dem ein Anwenderprogramm läuft, hat;
einen gesicherten Speicher (1240, 1270), in den geschützte Daten geladen werden, wenn die geschützten Daten vom Anwenderprogramm benutzt werden, wobei die geschützten Daten von dem auf dem Prozessor laufenden Anwenderprogramm benutzt werden, wenn der Prozessor im unprivilegierten Modus arbeitet; und
eine Steuereinheit (1203) für gesicherten Speicher, die für ein Steuern des Zugriffs auf den gesicherten Speicher konfiguriert ist,
wobei die Steuereinheit (1203) für gesicherten Speicher konfiguriert ist, um bei Zugreifen des Prozessors auf den gesicherten Speicher (1270) Folgendes auszuführen:
Bestimmen des Betriebsmodus des Prozessors;
Verweigern des Zugriffs auf den gesicherten Speicher (1270) durch den Prozessor, wenn der Betriebsmodus des Prozessors der privilegierte Modus ist; und
bei Zulassen des Zugriffs auf den gesicherten Speicher (1270) durch den Prozessor, Verweigern des Zugriffs auf den gesicherten Speicher (1270) durch den auf dem Prozessor laufenden Kern (1002) und Zulassen des Zugriffs durch das Anwenderprogramm auf die im gesicherten Speicher (1270) geladenen geschützten Daten,
**dadurch gekennzeichnet, dass** die Informationsverarbeitungsvorrichtung ferner aufweist:
einen normalen Speicher (1220, 1260), der ein oder mehrere Anwenderprogramme, jeweils einen Programmidentifikator umfassend, speichert;
eine Bestimmungsprogrammidentifikator-Speichereinheit, die konfiguriert ist für ein Speichern eines Bestimmungsprogrammidentifikators, der ein Programmidentifikator eines Anwenderprogramms ist, für den ein Zugriff auf den gesicherten Speicher zugelassen ist, und
einen intern geschützten Speicher (1205), der nicht für das eine oder die mehreren im normalen Speicher (1260) gespeicherten Anwenderprogramme zugänglich ist,
wobei die Steuereinheit (1203) für gesicherten Speicher ferner konfiguriert ist, um, bei Zugreifen eines oder mehrerer auf dem Prozessor laufender Anwenderprogramme auf den gesicherten Speicher (1270), Folgendes auszuführen:
Bestimmen des Betriebsmodus des Prozessors;
Bestimmen, ob ein Programmidentifikator des auf den gesicherten Speicher (1270) zugreifenden Anwenderprogramms mit dem in der Bestimmungsidentifikator-Speichereinheit gespeicherten Bestimmungsprogrammidentifikator übereinstimmt oder nicht;
wobei die Steuereinheit (1203) für gesicherten Speicher konfiguriert ist, um Zugriff auf den gesicherten Speicher (1270) durch den auf dem Prozessor laufenden Kern (1003) zu verweigern und Zugriff nur auf das Anwenderprogramm zuzulassen, das die in den gesicherten Speicher (1270) geladenen geschützten Daten benutzt, durch (a) Verweigern des Zugriffs auf den gesicherten Speicher (1270) durch den Prozessor, wenn der Betriebsmodus des Prozessors der privilegierte Modus ist oder der Programmidentifikator des Anwenderprogramms, das auf den gesicherten Speicher (1270) zugreift, nicht mit dem Bestimmungsprogrammidentifikator übereinstimmt, und (b) Zulassen des Zugriffs auf den gesicherten Speicher (1270) durch den Prozessor, wenn der Betriebsmodus des Prozessors der unprivilegierte Modus ist und der Programmidentifikator mit dem Bestimmungsprogrammidentifikator übereinstimmt,
wobei die Steuereinheit (1203) für gesicherten Speicher Folgendes aufweist
eine Bereichsbestimmungseinheit (1301), die konfiguriert ist für ein Bestimmen, ob der Prozessor auf den gesicherten Speicher (1270) zugreift oder nicht,
wobei die Bereichsbestimmungseinheit (1301) Folgendes aufweist:
eine Bereichsinformationsspeichereinheit, die konfiguriert ist für ein Speichern von Information, die einen Bereich des gesicherten Speichers (1270) angibt,
wobei die Bereichsbestimmungseinheit (1301) konfiguriert ist für ein Bestimmen, wenn der Prozessor auf den gesicherten Speicher (1270) oder den normalen Speicher (1260) zugreift, ob der Prozessor auf den gesicherten Speicher (1270) unter Anwenden der in der Bereichsbestimmungseinheit gespeicherten Bereichsinformation zugreift oder nicht, und
wobei die Bereichsinformation nur durch ein im intern geschützten Speicher (1205) gespeichertes Einstellprogramm eingestellt wird.

2. Informationsverarbeitungsvorrichtung nach Anspruch 1, wobei die Steuereinheit (1203) für gesicherten Speicher ferner konfiguriert ist, um, wenn das eine oder die mehreren auf dem Prozessor laufenden Anwenderprogramme auf den gesicherten Speicher (1270) zugreift, Folgendes auszuführen:
Bestimmen des Betriebsmodus des Prozessors;
Bestimmen, ob ein Programmidentifikator des auf den gesicherten Speicher (1270) zugreifenden Anwenderprogramms mit dem in der Bestimmungsidentifikator-Speichereinheit gespeicherten Bestimmungsprogrammidentifikator übereinstimmt oder nicht; und
Zulassen des Zugriffs auf den gesicherten Speicher (1270) durch den Prozessor in dem Fall, wenn der Betriebsmodus des Prozessors der unprivilegierte Modus ist und der Programmidentifikator mit dem Bestimmungsprogrammidentifikator übereinstimmt.

3. Informationsverarbeitungsvorrichtung nach Anspruch 1 oder 2,
wobei die Bestimmungsprogrammidentifikator-Speichereinheit konfiguriert ist für ein Speichern mehrerer Bestimmungsprogrammidentifikatoren, und
die Steuereinheit (1203) für gesicherten Speicher konfiguriert ist für ein Bestimmen, ob der Programmidentifikator des auf den gesicherten Speicher (1270) zugreifenden Anwenderprogramms mit einem der mehreren in der Bestimmungsidentifikator-Speichereinheit gespeicherten Bestimmungsprogrammidentifikatoren übereinstimmt oder nicht.

4. Informationsverarbeitungsvorrichtung nach Anspruch 1 oder 2,
wobei der normale Speicher (1260) mehrere Anwenderprogramme speichert, die je einen Programmidentifikator haben,
der gesicherte Speicher (1270) mehrere Speicherbereiche umfasst, die voneinander verschieden sind,
die Bestimmungsprogrammidentifikator-Speichereinheit konfiguriert ist für ein Speichern, für jeden der im gesicherten Speicher (1270) mehreren Speicherbereiche, eines Programmidentifikators, das ist ein Programmidentifikator eines für Zugriff auf den Speicherbereich zugelassenen Anwenderprogramms, und
die Steuereinheit (1203) für gesicherten Speicher konfiguriert ist für ein Bestimmen, ob ein Programmidentifikator eines auf einen der mehreren Speicherbereiche im gesicherten Speicher (1270) zugreifenden Anwenderprogramms mit einem in der Bestimmungsidentifikator-Speichereinheit gespeicherten Bestimmungsprogrammidentifikator in Übereinstimmung mit dem auf den Speicherbereich zugreifenden Anwenderprogramm übereinstimmt oder nicht.

5. Informationsverarbeitungsvorrichtung nach Anspruch 1, ferner aufweisend:
eine nichtflüchtige Speichervorrichtung, die durch Verschlüsseln der geschützten Daten verschlüsselte, geschützte Daten speichert; und
eine Verwaltungseinheit für nichtflüchtige Speichervorrichtung, die konfiguriert ist für ein Entschlüsseln der in der nichtflüchtigen Speichervorrichtung gespeicherten verschlüsselten, geschützten Daten und Schreiben der entschlüsselten, geschützten Daten in den gesicherten Speicher (1270).

6. Speicherzugriffssteuerverfahren für Anwendung in einer Informationsverarbeitungsvorrichtung nach Anspruch 1,
wobei das Speicherzugriffssteuerverfahren Folgendes umfasst:
Bestimmen, durch die Steuereinheit (1203) für gesicherten Speicher, des Betriebsmodus des Prozessors, wenn der Prozessor auf den gesicherten Speicher zugreift;
Verweigern, durch die Steuereinheit (1203) für gesicherten Speicher, des Zugriffs zum gesicherten Speicher durch den Prozessor in dem Fall, wenn der Betriebsmodus des Prozessors der privilegierte Modus ist; und
bei Zulassen des Zugriffs auf den gesicherten Speicher durch den Prozessor, Verweigern des Zugriffs auf den gesicherten Speicher durch den auf dem Prozessor laufenden Kern und Zulassen des Zugriffs durch das Anwenderprogramm auf die im gesicherten Speicher geladenen geschützten Daten,
Bestimmen, durch die Steuereinheit (1203) für gesicherten Speicher, ob ein Programmidentifikator des auf den gesicherten Speicher (1270) zugreifenden Anwenderprogramms mit dem in der Bestimmungsidentifikator-Speichereinheit gespeicherten Bestimmungsprogrammidentifikator übereinstimmt oder nicht;
Verweigern, durch die Steuereinheit (1203) für gesicherten Speicher, des Zugriffs auf den gesicherten Speicher (1270) durch den auf dem Prozessor laufenden Kern (1003) und Zulassen des Zugriffs nur durch das Anwenderprogramm, das die im gesicherten Speicher (1270) geladenen geschützten Daten benutzt, durch (a) Verweigern des Zugriffs auf den gesicherten Speicher (1270) durch den Prozessor, wenn der Betriebsmodus des Prozessors der privilegierte Modus ist oder der Programmidentifikator des auf den gesicherten Speicher (1270) zugreifenden Anwenderprogramms nicht mit dem Bestimmungsprogrammidentifikator übereinstimmt, und (b) Zulassen des Zugriffs auf den gesicherten Speicher (1270) durch den Prozessor, wenn der Betriebsmodus des Prozessors der unprivilegierte Modus ist und der Programmidentifikator mit dem Bestimmungsprogrammidentifikator übereinstimmt,
Bestimmen, durch die Bereichsbestimmungseinheit, wenn der Prozessor auf den gesicherten Speicher (1270) oder den normalen Speicher (1260) zugreift, ob der Prozessor auf den gesicherten Speicher (1270) bei Anwenden der in der Bereichsinformationsspeichereinheit gespeicherten Bereichsinformation zugreift oder nicht, und
die Bereichsinformation nur durch ein im intern geschützten Speicher (1205) gespeichertes Einstellprogramm eingestellt wird.

7. Program zum Bewirken, dass ein Computer einen Speicherzugriff steuert,
wobei ein Prozessor des Computers, als einen Betriebsmodus, einen privilegierten Modus, in dem ein Kern läuft, und einen unprivilegierten Modus, in dem ein Anwenderprogramm läuft, hat,
ein Speicher des Computers einen gesicherten Speicherbereich umfasst, in den geschützte Daten geladen werden, wenn geschützte Daten vom Anwenderprogramm benutzt werden, wobei die geschützten Daten von dem auf dem Prozessor laufenden Anwenderprogramm benutzt werden, wenn der Prozessor im unprivilegierten Modus arbeitet, und
das Programm den Computer zum Ausführen von Folgendem veranlasst:
dem Speicherzugriffssteuerverfahren nach Anspruch 6.

8. Integrierte Schaltung, aufweisend:
eine Informationsverarbeitungsvorrichtung nach Anspruch 1.

## Revendications

1. Appareil de traitement d'informations (110, 111) comprenant :
un processeur (1201) qui a, en tant que mode de fonctionnement, un mode privilégié dans lequel un noyau (1002) s'exécute et un mode non privilégié dans lequel un programme d'utilisateur s'exécute ;
une mémoire de confiance (1240, 1270) dans laquelle des données protégées sont chargées lorsque les données protégées sont utilisées par le programme d'utilisateur, les données protégées étant utilisées par le programme d'utilisateur s'exécutant sur ledit processeur lorsque ledit processeur est dans le mode non privilégié ; et
une unité de contrôle de mémoire de confiance (1203) configurée pour contrôler l'accès à ladite mémoire de confiance,
dans lequel ladite unité de contrôle de mémoire de confiance (1203) est configurée pour, lorsque ledit processeur accède à ladite mémoire de confiance (1270) :
déterminer le mode de fonctionnement dudit processeur ;
refuser l'accès à ladite mémoire de confiance (1270) par ledit processeur, lorsque le mode de fonctionnement dudit processeur est le mode privilégié ; et
lors de l'autorisation de l'accès à ladite mémoire de confiance (1270) par ledit processeur, refuser l'accès à ladite mémoire de confiance (1270) par le noyau (1002) s'exécutant sur ledit processeur et autoriser l'accès par le programme d'utilisateur aux données protégées chargées dans ladite mémoire de confiance (1270),
**caractérisé en ce que** l'appareil de traitement d'informations comprend en outre :
une mémoire normale (1220, 1260) qui stocke un ou plusieurs programmes d'utilisateur dont chacun a un identificateur de programme ;
une unité de stockage d'identificateur de programme de détermination configurée pour stocker un identificateur de programme de détermination qui est un identificateur de programme d'un programme d'utilisateur autorisé à accéder à ladite mémoire de confiance, et
une mémoire protégée interne (1205) non accessible par l'un quelconque des un ou plusieurs programmes d'utilisateur stockés dans ladite mémoire normale (1260),
dans lequel ladite unité de contrôle de mémoire de confiance (1203) est en outre configurée pour, lorsque l'un quelconque des un ou plusieurs programmes d'utilisateur s'exécutant sur ledit processeur accède à ladite mémoire de confiance (1270) :
déterminer le mode de fonctionnement dudit processeur ;
déterminer si oui ou non un identificateur de programme du programme d'utilisateur qui accède à ladite mémoire de confiance (1270) concorde avec l'identificateur de programme de détermination stocké dans ladite unité de stockage d'identificateur de détermination ;
dans lequel ladite unité de contrôle de mémoire de confiance (1203) est configurée pour refuser l'accès à ladite mémoire de confiance (1270) par le noyau (1003) s'exécutant sur ledit processeur et autoriser l'accès uniquement par le programme d'utilisateur qui utilise les données protégées chargées dans ladite mémoire de confiance (1270), en (a) refusant l'accès à ladite mémoire de confiance (1270) par ledit processeur, lorsque le mode de fonctionnement dudit processeur est le mode privilégié ou que l'identificateur de programme du programme d'utilisateur qui accède à ladite mémoire de confiance (1270) ne concorde pas avec l'identificateur de programme de détermination, et (b) autorisant l'accès à ladite mémoire de confiance (1270) par ledit processeur, lorsque le mode de fonctionnement dudit processeur est le mode non privilégié et que l'identificateur de programme concorde avec l'identificateur de programme de détermination,
dans lequel ladite unité de contrôle de mémoire de confiance (1203) comprend
une unité de détermination de zone (1301) configurée pour déterminer si oui ou non ledit processeur accède à ladite mémoire de confiance (1270),
dans lequel ladite unité de détermination de zone (1301) comprend
une unité de stockage d'informations de zone configurée pour stocker des informations de zone indiquant une zone de ladite mémoire de confiance (1270),
dans lequel ladite unité de détermination de zone (1301) est configurée pour, lorsque ledit processeur accède à ladite mémoire de confiance (1270) ou à ladite mémoire normale (1260), déterminer si oui ou non ledit processeur accède à ladite mémoire de confiance (1270), en utilisant les informations de zone stockées dans ladite unité de stockage d'informations de zone, et
dans lequel les informations de zone sont réglées uniquement par un programme de réglage stocké dans ladite mémoire protégée interne (1205).

2. Appareil de traitement d'informations selon la revendication 1,
dans lequel ladite unité de contrôle de mémoire de confiance (1203) est en outre configurée pour, lorsque l'un quelconque des un ou plusieurs programmes d'utilisateur s'exécutant sur ledit processeur accède à ladite mémoire de confiance (1270) :
déterminer le mode de fonctionnement dudit processeur ;
déterminer si oui ou non un identificateur de programme du programme d'utilisateur qui accède à ladite mémoire de confiance (1270) concorde avec l'identificateur de programme de détermination stocké dans ladite unité de stockage d'identificateur de détermination ; et
autoriser l'accès à ladite mémoire de confiance (1270) par ledit processeur, dans le cas où le mode de fonctionnement dudit processeur est le mode non privilégié et l'identificateur de programme concorde avec l'identificateur de programme de détermination.

3. Appareil de traitement d'informations selon la revendication 1 ou 2,
dans lequel ladite unité de stockage d'identificateur de programme de détermination est configurée pour stocker une pluralité d'identificateurs de programme de détermination, et
ladite unité de contrôle de mémoire de confiance (1203) est configurée pour déterminer si oui ou non l'identificateur de programme du programme d'utilisateur qui accède à ladite mémoire de confiance (1270) concorde avec l'un quelconque de la pluralité d'identificateurs de programme de détermination stockée dans ladite unité de stockage d'identificateur de détermination.

4. Appareil de traitement d'informations selon la revendication 1 ou 2,
dans lequel ladite mémoire normale (1260) stocke une pluralité de programmes d'utilisateur dont chacun a un identificateur de programme,
ladite mémoire de confiance (1270) comprend une pluralité de zones de stockage qui diffèrent les unes des autres,
ladite unité de stockage d'identificateur de programme de détermination est configurée pour stocker, pour chacune de la pluralité de zones de stockage dans ladite mémoire de confiance (1270), un identificateur de programme de détermination qui est un identificateur de programme d'un programme d'utilisateur autorisé à accéder à la zone de stockage, et
ladite unité de contrôle de mémoire de confiance (1203) est configurée pour déterminer si oui ou non un identificateur de programme d'un programme d'utilisateur qui accède à l'une quelconque de la pluralité de zones de stockage dans ladite mémoire de confiance (1270) concorde avec un identificateur de programme de détermination stocké dans ladite unité de stockage d'identificateur de détermination en correspondance avec la zone de stockage faisant l'objet d'un accès par le programme d'utilisateur.

5. Appareil de traitement d'informations selon la revendication 1, comprenant en outre :
un dispositif de stockage non volatil qui stocke des données protégées chiffrées obtenues en chiffrant les données protégées ; et
une unité de gestion de mémoire non volatile configurée pour déchiffrer les données protégées chiffrées stockées dans ledit dispositif de stockage non volatil, et écrire les données protégées déchiffrées vers ladite mémoire de confiance (1270).

6. Procédé de contrôle d'accès mémoire destiné à être utilisé dans un appareil de traitement d'informations selon la revendication 1,
ledit procédé de contrôle d'accès mémoire comprend :
la détermination, par l'unité de contrôle de mémoire de confiance (1203), du mode de fonctionnement du processeur, lorsque le processeur accède à la mémoire de confiance ;
le refus, par l'unité de contrôle de mémoire de confiance (1203), de l'accès à la mémoire de confiance par le processeur, dans le cas où le mode de fonctionnement du processeur est le mode privilégié ; et
lors de l'autorisation de l'accès à la mémoire de confiance par le processeur, le refus de l'accès à la mémoire de confiance par le noyau s'exécutant sur le processeur et l'autorisation de l'accès par le programme d'utilisateur aux données protégées chargées dans la mémoire de confiance,
la détermination, par l'unité de contrôle de mémoire de confiance (1203), de si oui ou non un identificateur de programme du programme d'utilisateur qui accède à ladite mémoire de confiance (1270) concorde avec l'identificateur de programme de détermination stocké dans ladite unité de stockage d'identificateur de détermination ;
le refus, par l'unité de contrôle de mémoire de confiance (1203), de l'accès à ladite mémoire de confiance (1270) par le noyau (1003) s'exécutant sur ledit processeur et l'autorisation de l'accès uniquement par le programme d'utilisateur qui utilise les données protégées chargées dans ladite mémoire de confiance (1270), en (a) refusant l'accès à ladite mémoire de confiance (1270) par ledit processeur, lorsque le mode de fonctionnement dudit processeur est le mode privilégié ou que l'identificateur de programme du programme d'utilisateur qui accède à ladite mémoire de confiance (1270) ne concorde pas avec l'identificateur de programme de détermination, et (b) autorisant l'accès à ladite mémoire de confiance (1270) par ledit processeur, lorsque le mode de fonctionnement dudit processeur est le mode non privilégié et que l'identificateur de programme concorde avec l'identificateur de programme de détermination,
la détermination, par ladite unité de détermination de zone, lorsque ledit processeur accède à ladite mémoire de confiance (1270) ou à ladite mémoire normale (1260), de si oui ou non ledit processeur accède à ladite mémoire de confiance (1270), en utilisant les informations de zone stockées dans ladite unité de stockage d'informations de zone, et
les informations de zone sont réglées uniquement par un programme de réglage stocké dans ladite mémoire protégée interne (1205).

7. Programme destiné à amener un ordinateur à contrôler l'accès mémoire,
dans lequel un processeur de l'ordinateur a, en tant que mode de fonctionnement, un mode privilégié dans lequel un noyau s'exécute et un mode non privilégié dans lequel un programme d'utilisateur s'exécute
une mémoire de l'ordinateur comprend une zone de mémoire de confiance dans laquelle des données protégées sont chargées lorsque les données protégées sont utilisées par le programme d'utilisateur, les données protégées étant utilisées par un programme s'exécutant sur le processeur lorsque le processeur est dans le mode non privilégié, et
ledit programme amène l'ordinateur à exécuter :
le procédé de contrôle d'accès mémoire de la revendication 6.

8. Circuit intégré comprenant :
un appareil de traitement d'informations selon la revendication 1.
